# EUROPEAN PATENT APPLICATION

(11) **EP 4 554 274 A1**
(43) Date of publication of application: **14.05.2025**
(21) Application number: 23842159.8
(22) Date of filing: 11.07.2023
(51) Int. Cl.: H04W 24/02

(54) **DISCONTINUOUS RECEPTION MANAGEMENT METHOD, AND COMMUNICATION SYSTEM AND APPARATUS**

(30) Priority: 21.07.2022 CN 202210865378; 15.08.2022 CN 202210981753
(71) Applicant: Huawei Technologies Co., Ltd., Shenzhen, Guangdong 518129 (CN)
(72) Inventor: ZHANG, Yanqing, Shenzhen, Guangdong 518129 (CN); XUE, Yifan, Shenzhen, Guangdong 518129 (CN); LI, Xueru, Shenzhen, Guangdong 518129 (CN)
(74) Representative: Pfenning, Meinig & Partner mbB
(86) International application number: PCT/CN2023/106808
(87) International publication number: WO 2024/017094

(57) **Abstract**

This application relates to the field of communication technologies, and in particular, to a DRX management method, a communication system, and an apparatus. In the method, a first device sends first configuration information to a second device, where the first configuration information is used to configure first DRX configuration information, second DRX configuration information, a first index, and a second index, the first index corresponds to the first DRX configuration information, and the second index corresponds to the second DRX configuration information. The first device further sends first indication information to the second device, where the first indication information indicates to start N first timers corresponding to the first index, and N is a positive integer greater than or equal to 1. Based on this, even if there are a plurality of sets of DRX parameters are configured, the second device can start, by default, the first timer indicated by the first device, to resolve a problem of how to select a DRX parameter when the plurality of sets of DRX parameters are configured.

## Description

This application claims priority to Chinese Patent Application No. 202210865378.2, filed with the China National Intellectual Property Administration on July 21, 2022 and entitled "MULTI-CDRX CONFIGURATION METHOD, TERMINAL DEVICE, AND NETWORK DEVICE", which is incorporated herein by reference in its entirety.

This application further claims priority to Chinese Patent Application No. 202210981753.X, filed with the China National Intellectual Property Administration on August 15, 2022 and entitled "DISCONTINUOUS RECEPTION MANAGEMENT METHOD, COMMUNICATION SYSTEM, AND APPARATUS", which is incorporated herein by reference in its entirety.

### TECHNICAL FIELD

This application relates to the field of communication technologies, and in particular, to a discontinuous reception management method, a communication system, and an apparatus.

### BACKGROUND

To reduce energy consumption of a device, discontinuous reception (discontinuous reception, DRX) enables the device to periodically enter a sleep mode and a wake-up mode. The device does not monitor a control channel in the sleep mode, and monitors the control channel in the wake-up mode. This method can achieve an objective of energy saving.

### SUMMARY

For a device that uses DRX, it needs to be ensured that a data transmission cycle is close to a DRX cycle as much as possible, to ensure normal data transmission. However, in some scenarios, transmitted data may include a plurality of types of data, cycles of different types of data may be different, and a set of DRX parameters cannot meet transmission requirements of data with different cycles.

An ideal solution is to configure different DRX parameters for data with different cycles, so that different pieces of DRX serve the data with different cycles. However, when a plurality of sets of DRX parameters are configured for one device, how to select a DRX parameter to be used by the device in different cases is a problem that needs to be resolved.

To resolve a problem of how to select a to-be-used DRX parameter when the plurality of sets of DRX parameters are configured for the device, this application provides a DRX management method, a communication system, and an apparatus. To achieve the foregoing objective, this application uses the following technical solutions.

According to a first aspect, a DRX management method is provided. A communication apparatus that performs the DRX management method may be a first device, or may be a module used in the first device, for example, a chip or a chip system. The following provides descriptions by using an example in which an execution body is the first device. The DRX management method includes: The first device sends first configuration information to a second device, where the first configuration information is used to configure first DRX configuration information, second DRX configuration information, a first index, and a second index, the first index corresponds to the first DRX configuration information, and the second index corresponds to the second DRX configuration information. In addition, the first device sends first indication information to the second device, where the first indication information indicates to start N first timers corresponding to the first index, and N is a positive integer greater than or equal to 1. Based on this solution, the first device may configure, for the second device, a plurality of indexes corresponding to a plurality of sets of DRX configuration information, and indicates the second device to start the N first timers corresponding to the first index in the plurality of indexes. Therefore, the second device may start, by default, the first timer indicated by the first device, so that a problem that it is difficult to select a DRX configuration parameter when there are the plurality of sets of DRX configuration parameters can be overcome.

With reference to the first aspect, in a possible implementation, the first indication information includes the first index. Alternatively, the first indication information includes a first parameter, the first parameter indicates a first condition, and the first index is an index that meets the first condition.

With reference to the first aspect, in a possible implementation, the N first timers are indicated by the first DRX configuration information, and the N first timers include at least one of the following: a first DRX-inactivity-timer, a first DRX hybrid automatic repeat request HARQ round trip time RTT downlink timer, a first DRX downlink retransmission timer, a first DRX HARQ RTT uplink timer, and a first DRX uplink retransmission timer.

With reference to the first aspect, in a possible implementation, the DRX management method further includes: The first device sends a first transport block to the second device. In addition, the first device further receives a first HARQ feedback from the second device, where the first HARQ feedback is a HARQ feedback of the second device for the first transport block. Then, the first device starts the first DRX HARQ RTT downlink timer in a first time unit, where the first time unit is an initial time unit after the first device receives the first HARQ feedback. Time units are obtained through division based on time domain, and a division result of the time units is learned by the first device in advance.

With reference to the first aspect, in a possible implementation, the DRX management method further includes: If the first DRX HARQ RTT downlink timer expires, and the first HARQ feedback is a negative acknowledgment NACK, the first device starts the first DRX downlink retransmission timer in a second time unit, where the second time unit is an initial time unit after the first DRX HARQ RTT downlink timer expires.

With reference to the first aspect, in a possible implementation, the first indication information is carried in first control information, and first control information indicates the first transport block. The DRX management method further includes: If the first transport block is a new transmission (new transmission) transport block, the first device starts the first DRX-inactivity-timer in a third time unit, where the third time unit is an initial time unit after a time unit corresponding to a physical downlink control channel PDCCH for transmitting the first control information.

With reference to the first aspect, in a possible implementation, the first control information is further used to activate a semi-persistent scheduling configuration, and the semi-persistent scheduling configuration includes a first transmission cycle; and in an activation period of the semi-persistent scheduling configuration, the first device sends the first transport block to the second device based on the first transmission cycle.

With reference to the first aspect, in a possible implementation, the first indication information is carried in second configuration information; and the DRX management method further includes: The first device sends first control information to the second device, where the first control information indicates the first transport block. If the first transport block is a new transmission transport block, the first device starts the first DRX-inactivity-timer in a third time unit, where the third time unit is an initial time unit after a time unit corresponding to a physical downlink control channel PDCCH for transmitting the first control information.

With reference to the first aspect, in a possible implementation, the second configuration information further indicates and/or activates a semi-persistent scheduling configuration, and the semi-persistent scheduling configuration includes a first transmission cycle; and in an activation period of the semi-persistent scheduling configuration, the first device sends the first transport block to the second device based on the first transmission cycle.

With reference to the first aspect, in a possible implementation, the DRX management method further includes: The first device receives a second transport block from the second device. The first device starts the first DRX HARQ RTT uplink timer in a fourth time unit, where the fourth time unit is an initial time unit after a time unit corresponding to a physical uplink shared channel PUSCH that sends the second transport block. Time units are obtained through division based on time domain, and a division result of the time units is learned by the first device in advance.

With reference to the first aspect, in a possible implementation, the DRX management method further includes: If the first DRX HARQ RTT uplink timer expires and the second transport block fails to be decoded, the first device starts the first DRX uplink retransmission timer in a fifth time unit, where the fifth time unit is an initial time unit after the first DRX HARQ RTT uplink timer expires.

With reference to the first aspect, in a possible implementation, the first indication information is carried in second control information, and the second control information indicates the second transport block.

With reference to the first aspect, in a possible implementation, the second control information is further used to activate a semi-persistent scheduling configuration, and the semi-persistent scheduling configuration includes a second transmission cycle. In an activation period of the semi-persistent scheduling configuration, the first device receives the second transport block from the second device based on the second transmission cycle.

With reference to the first aspect, in a possible implementation, the first indication information is carried in second configuration information. The DRX management method further includes: The first device sends second control information to the second device, and the second control information indicates the second transport block. If the second transport block is a new transmission transport block, the first device starts the first DRX-inactivity-timer in a sixth time unit, where the sixth time unit is an initial time unit after a time unit corresponding to a PDCCH for transmitting the second control information.

With reference to the first aspect, in a possible implementation, the second configuration information further indicates and/or activates a semi-persistent scheduling configuration, and the semi-persistent scheduling configuration includes a second transmission cycle. In an activation period of the semi-persistent scheduling configuration, the first device receives the second transport block from the second device based on the second transmission cycle.

With reference to the first aspect, in a possible implementation, the first configuration information is further used to configure third DRX configuration information and a third index, and the third index corresponds to the third DRX configuration information.

According to a second aspect, a DRX management method is provided. A communication apparatus that performs the DRX management method may be a second device, or may be a module used in the second device, for example, a chip or a chip system. The following provides descriptions by using an example in which an execution body is the second device. The DRX management method includes: The second device receives first configuration information from a first device, where the first configuration information is used to configure first DRX configuration information, second DRX configuration information, a first index, and a second index, the first index corresponds to the first DRX configuration information, and the second index corresponds to the second DRX configuration information. The second device receives first indication information from the first device, and starts, based on the first indication information, N first timers corresponding to the first index, where N is a positive integer greater than or equal to 1.

With reference to the second aspect, in a possible implementation, the first indication information includes the first index. Alternatively, the first indication information includes a first parameter, the first parameter indicates a first condition, and the first index is an index that meets the first condition.

With reference to the second aspect, in a possible implementation, the N first timers are indicated by the first DRX configuration information, and the N first timers include at least one of the following: a first DRX-inactivity-timer, a first DRX hybrid automatic repeat request HARQ round trip time RTT downlink timer, a first DRX downlink retransmission timer, a first DRX HARQ RTT uplink timer, and a first DRX uplink retransmission timer.

With reference to the second aspect, in a possible implementation, the DRX management method further includes: The second device receives a first transport block from the first device. In addition, the second device further sends a first HARQ feedback to the first device, where the first HARQ feedback is a HARQ feedback of the second device for the first transport block. Then, the second device starts the first DRX HARQ RTT downlink timer in a first time unit, where the first time unit is an initial time unit after the second device sends the first HARQ feedback. Time units are obtained through division based on time domain, and a division result of the time units is learned by the first device in advance.

With reference to the second aspect, in a possible implementation, the DRX management method further includes: If the first DRX HARQ RTT downlink timer expires and the first transport block fails to be decoded, the second device starts the first DRX downlink retransmission timer in a second time unit, where the second time unit is an initial time unit after the first DRX HARQ RTT downlink timer expires.

With reference to the second aspect, in a possible implementation, the first indication information is carried in first control information, and the first control information indicates the first transport block. The DRX management method further includes: If the first transport block is a new transmission transport block, the second device starts the first DRX-inactivity-timer in a third time unit, where the third time unit is an initial time unit after a time unit corresponding to a physical downlink control channel PDCCH that carries the first control information.

With reference to the second aspect, in a possible implementation, the first control information is further used to activate a semi-persistent scheduling configuration, and the semi-persistent scheduling configuration includes a first transmission cycle. In an activation period of the semi-persistent scheduling configuration, the second device receives the first transport block from the first device based on the first transmission cycle.

With reference to the second aspect, in a possible implementation, the first indication information is carried in second configuration information. The DRX management method further includes: The second device receives first control information from the first device, where the first control information indicates the first transport block. If the first transport block is a new transmission transport block, the second device starts the first DRX-inactivity-timer in a third time unit, where the third time unit is an initial time unit after a time unit corresponding to a PDCCH that carries the first control information.

With reference to the second aspect, in a possible implementation, the second configuration information further indicates and/or activates a semi-persistent scheduling configuration, and the semi-persistent scheduling configuration includes a first transmission cycle; and in an activation period of the semi-persistent scheduling configuration, the second device receives the first transport block from the first device based on the first transmission cycle.

With reference to the second aspect, in a possible implementation, the DRX management method further includes: The second device sends a second transport block to the first device. Then, the second device starts the first DRX HARQ RTT uplink timer in a fourth time unit, where the fourth time unit is an initial time unit after a time unit corresponding to a physical uplink shared channel PUSCH that carries the second transport block. Time units are obtained through division based on time domain, and a division result of the time units is learned by the first device in advance.

With reference to the second aspect, in a possible implementation, the DRX management method further includes: The second device starts the first DRX uplink retransmission timer in a fifth time unit, where the fifth time unit is an initial time unit after the first DRX HARQ RTT uplink timer expires. In addition, the second device monitors control information within start time of the first DRX uplink retransmission timer.

With reference to the second aspect, in a possible implementation, the first indication information is carried in second control information, and the second control information indicates the second transport block.

With reference to the second aspect, in a possible implementation, the second control information is further used to activate a semi-persistent scheduling configuration, and the semi-persistent scheduling configuration includes a second transmission cycle. In an activation period of the semi-persistent scheduling configuration, the second device sends the second transport block to the first device based on the second transmission cycle.

With reference to the second aspect, in a possible implementation, the first indication information is carried in the second configuration information. The DRX management method further includes: The second device receives the second control information from the first device, and the second control information indicates the second transport block. If the second transport block is a new transmission transport block, the second device starts the first DRX-inactivity-timer in a sixth time unit, where the sixth time unit is an initial time unit after a time unit corresponding to a PDCCH that carries the second control information.

With reference to the second aspect, in a possible implementation, the second configuration information further indicates and/or activates a semi-persistent scheduling configuration, and the semi-persistent scheduling configuration includes a second transmission cycle. In an activation period of the semi-persistent scheduling configuration, the second device sends the second transport block to the second device based on the second transmission cycle.

With reference to the second aspect, in a possible implementation, the first configuration information is further used to configure third DRX configuration information and a third index, and the third index corresponds to the third DRX configuration information.

According to a third aspect, this application provides a communication apparatus. The communication apparatus may be a first device or a chip or a chip system in the first device, or may be a functional module that is in the first device and that is configured to implement the method in any possible design of the first aspect. The communication apparatus may implement functions performed by the first terminal device in the foregoing aspects or the possible designs, and the functions may be implemented by hardware executing corresponding software. The hardware or the software includes one or more modules corresponding to the functions. For example, the communication apparatus includes a transceiver module and a processing module. The transceiver module is configured to send first configuration information to a second device, where the first configuration information is used to configure first DRX configuration information, second DRX configuration information, a first index, and a second index, the first index corresponds to the first DRX configuration information, and the second index corresponds to the second DRX configuration information. In addition, the transceiver module is further configured to send first indication information to the second device, where the first indication information indicates to start N first timers corresponding to the first index, and N is a positive integer greater than or equal to 1.

With reference to the third aspect, in a possible implementation, the first indication information includes the first index. Alternatively, the first indication information includes a first parameter, the first parameter indicates a first condition, and the first index is an index that meets the first condition.

With reference to the third aspect, in a possible implementation, the N first timers are indicated by the first DRX configuration information, and the N first timers include at least one of the following: a first DRX-inactivity-timer, a first DRX hybrid automatic repeat request HARQ round trip time RTT downlink timer, a first DRX downlink retransmission timer, a first DRX HARQ RTT uplink timer, and a first DRX uplink retransmission timer.

With reference to the third aspect, in a possible implementation, the transceiver module is further configured to send a first transport block to the second device. In addition, the transceiver module is further configured to receive a first HARQ feedback from the second device, where the first HARQ feedback is a HARQ feedback of the second device for the first transport block. The processing module is configured to start the first DRX HARQ RTT downlink timer in a first time unit, where the first time unit is an initial time unit after the first device receives the first HARQ feedback. Time units are obtained through division based on time domain, and a division result of the time units is learned by the first device in advance.

With reference to the third aspect, in a possible implementation, if the first DRX HARQ RTT downlink timer expires, and the first HARQ feedback is a negative acknowledgment NACK, the processing module is further configured to start the first DRX downlink retransmission timer in a second time unit, where the second time unit is an initial time unit after the first DRX HARQ RTT downlink timer expires.

With reference to the third aspect, in a possible implementation, the first indication information is carried in first control information, and the first control information indicates the first transport block. If the first transport block is a new transmission transport block, the processing module is further configured to start the first DRX-inactivity-timer in a third time unit, where the third time unit is an initial time unit after a time unit corresponding to a physical downlink control channel PDCCH for transmitting the first control information.

With reference to the third aspect, in a possible implementation, the first control information is further used to activate a semi-persistent scheduling configuration, and the semi-persistent scheduling configuration includes a first transmission cycle. In an activation period of the semi-persistent scheduling configuration, the transceiver module is configured to send the first transport block to the second device based on the first transmission cycle.

With reference to the third aspect, in a possible implementation, the first indication information is carried in second configuration information. The transceiver module is further configured to send the first control information to the second device, where the first control information indicates the first transport block. If the first transport block is a new transmission transport block, the processing module is further configured to start the first DRX-inactivity-timer in a third time unit, where the third time unit is an initial time unit after a time unit corresponding to a physical downlink control channel PDCCH for transmitting the first control information.

With reference to the third aspect, in a possible implementation, the second configuration information further indicates and/or activates a semi-persistent scheduling configuration, and the semi-persistent scheduling configuration includes a first transmission cycle. In an activation period of the semi-persistent scheduling configuration, the transceiver module is configured to send the first transport block to the second device based on the first transmission cycle.

With reference to the third aspect, in a possible implementation, the transceiver module is further configured to receive a second transport block from the second device. In addition, the transceiver module is further configured to start the first DRX HARQ RTT uplink timer in a fourth time unit, where the fourth time unit is an initial time unit after a time unit corresponding to a physical uplink shared channel PUSCH that sends the second transport block. Time units are obtained through division based on time domain, and a division result of the time units is learned by the first device in advance.

With reference to the third aspect, in a possible implementation, if the first DRX HARQ RTT uplink timer expires and the second transport block fails to be decoded, the processing module is further configured to start the first DRX uplink retransmission timer in a fifth time unit, where the fifth time unit is an initial time unit after the first DRX HARQ RTT uplink timer expires.

With reference to the third aspect, in a possible implementation, the first indication information is carried in second control information, and the second control information indicates the second transport block.

With reference to the third aspect, in a possible implementation, the second control information is further used to activate a semi-persistent scheduling configuration, and the semi-persistent scheduling configuration includes a second transmission cycle. In an activation period of the semi-persistent scheduling configuration, the transceiver module is configured to receive the second transport block from the second device based on the second transmission cycle.

With reference to the third aspect, in a possible implementation, the first indication information is carried in the second configuration information. The transceiver module is configured to send the second control information to the second device, and the second control information indicates the second transport block. If the second transport block is a new transmission transport block, the processing module is configured to start the first DRX-inactivitytimer in a sixth time unit, where the sixth time unit is an initial time unit after a time unit corresponding to a PDCCH for transmitting the second control information.

With reference to the third aspect, in a possible implementation, the second configuration information further indicates and/or activates a semi-persistent scheduling configuration, and the semi-persistent scheduling configuration includes a second transmission cycle. In an activation period of the semi-persistent scheduling configuration, the transceiver module is configured to receive the second transport block from the second device based on the second transmission cycle.

With reference to the third aspect, in a possible implementation, the first configuration information is further used to configure third DRX configuration information and a third index, and the third index corresponds to the third DRX configuration information.

According to a fourth aspect, this application provides a communication apparatus. The communication apparatus may be a second device or a chip or a chip system in the second device, or may be a functional module that is in the second device and that is configured to implement the method in any possible design of the second aspect. The communication apparatus may implement functions performed by the second terminal device in the foregoing aspects or the possible designs, and the functions may be implemented by hardware executing corresponding software. The hardware or the software includes one or more modules corresponding to the functions. For example, the communication apparatus includes a transceiver module and a processing module. The transceiver module is configured to receive first configuration information from a first device, where the first configuration information is used to configure first DRX configuration information, second DRX configuration information, a first index, and a second index, the first index corresponds to the first DRX configuration information, and the second index corresponds to the second DRX configuration information. The transceiver module is further configured to send first indication information to the second device, where the first indication information indicates to start N first timers corresponding to the first index, and N is a positive integer greater than or equal to 1.

With reference to the fourth aspect, in a possible implementation, the first indication information includes the first index. Alternatively, the first indication information includes a first parameter, the first parameter indicates a first condition, and the first index is an index that meets the first condition.

With reference to the fourth aspect, in a possible implementation, the N first timers are indicated by the first DRX configuration information, and the N first timers include at least one of the following: a first DRX-inactivity-timer, a first DRX hybrid automatic repeat request HARQ round trip time RTT downlink timer, a first DRX downlink retransmission timer, a first DRX HARQ RTT uplink timer, and a first DRX uplink retransmission timer.

With reference to the fourth aspect, in a possible implementation, the transceiver module is configured to receive a first transport block from the first device. In addition, the transceiver module is further configured to send a first HARQ feedback to the first device, where the first HARQ feedback is a HARQ feedback of the second device for the first transport block. Then, the transceiver module is further configured to start the first DRX HARQ RTT downlink timer in a first time unit, where the first time unit is an initial time unit after the second device sends the first HARQ feedback. Time units are obtained through division based on time domain, and a division result of the time units is learned by the first device in advance.

With reference to the fourth aspect, in a possible implementation, if the first DRX HARQ RTT downlink timer expires, and the first transport block fails to be decoded, the processing module is configured to start the first DRX downlink retransmission timer in a second time unit, where the second time unit is an initial time unit after the first DRX HARQ RTT downlink timer expires.

With reference to the fourth aspect, in a possible implementation, the first indication information is carried in first control information, and the first control information indicates the first transport block. If the first transport block is a new transmission transport block, the second device starts the first DRX-inactivity-timer in a third time unit, where the third time unit is an initial time unit after a time unit corresponding to a physical downlink control channel PDCCH that carries the first control information.

With reference to the fourth aspect, in a possible implementation, the first control information is further used to activate a semi-persistent scheduling configuration, and the semi-persistent scheduling configuration includes a first transmission cycle. In an activation period of the semi-persistent scheduling configuration, the transceiver module is further configured to receive the first transport block from the first device based on the first transmission cycle.

With reference to the fourth aspect, in a possible implementation, the first indication information is carried in second configuration information. The transceiver module is further configured to receive the first control information from the first device, where the first control information indicates the first transport block. If the first transport block is a new transmission transport block, the processing module is configured to start the first DRX-inactivity-timer in a third time unit, where the third time unit is an initial time unit after a time unit corresponding to a PDCCH that carries the first control information.

With reference to the fourth aspect, in a possible implementation, the second configuration information further indicates and/or activates a semi-persistent scheduling configuration, and semi-persistent scheduling configuration includes a first transmission cycle. In an activation period of the semi-persistent scheduling configuration, the transceiver module is further configured to receive the first transport block from the first device based on the first transmission cycle.

With reference to the fourth aspect, in a possible implementation, the transceiver module is further configured to send a second transport block to the first device. Then, the processing module is further configured to start the first DRX HARQ RTT uplink timer in a fourth time unit, where the fourth time unit is an initial time unit after a time unit corresponding to a physical uplink shared channel PUSCH that carries the second transport block. Time units are obtained through division based on time domain, and a division result of the time units is learned by the first device in advance.

With reference to the fourth aspect, in a possible implementation, the processing module is configured to start the first DRX uplink retransmission timer in a fifth time unit, where the fifth time unit is an initial time unit after the first DRX HARQ RTT uplink timer expires. In addition, the processing module is further configured to monitor control information within start time of the first DRX uplink retransmission timer.

With reference to the fourth aspect, in a possible implementation, the first indication information is carried in second control information, and the second control information indicates the second transport block.

With reference to the fourth aspect, in a possible implementation, the second control information is further used to activate a semi-persistent scheduling configuration, and the semi-persistent scheduling configuration includes a second transmission cycle. In an activation period of the semi-persistent scheduling configuration, the transceiver module is further configured to send the second transport block to the first device based on the second transmission cycle.

With reference to the fourth aspect, in a possible implementation, the first indication information is carried in the second configuration information. The transceiver module is further configured to receive the second control information from the first device, and the second control information indicates the second transport block. If the second transport block is a new transmission transport block, the second device starts the first DRX-inactivity-timer in a sixth time unit, where the sixth time unit is an initial time unit after a time unit corresponding to a PDCCH that carries the second control information.

With reference to the fourth aspect, in a possible implementation, the second configuration information further indicates and/or activates a semi-persistent scheduling configuration, and the semi-persistent scheduling configuration includes a second transmission cycle. In an activation period of the semi-persistent scheduling configuration, the transceiver module is further configured to send the second transport block to the second device based on the second transmission cycle.

With reference to the fourth aspect, in a possible implementation, the first configuration information is further used to configure third DRX configuration information and a third index, and the third index corresponds to the third DRX configuration information.

According to a fifth aspect, a communication apparatus is provided, and includes: a processor and a memory. The memory is configured to store computer-executable instructions. When the communication apparatus runs, the processor executes the computer-executable instructions stored in the memory, so that the communication apparatus performs the DRX management method according to any one of the first aspect or the second aspect.

According to a sixth aspect, a communication apparatus is provided, and includes a processor. The processor is configured to: be coupled to a memory, and perform the DRX management method according to any one of the first aspect or the second aspect based on instructions after reading the instructions in the memory.

In a possible implementation, the communication apparatus further includes the memory, and the memory is configured to store the computer instructions.

In a possible implementation, the communication apparatus further includes a communication interface, and the communication interface is used by the communication apparatus to communicate with another device. For example, the communication interface is a transceiver, an input/output interface, an interface circuit, an output circuit, an input circuit, a pin, a related circuit, or the like.

In a possible implementation, the communication apparatus may be a chip or a chip system. When the communication apparatus is the chip system, the communication apparatus may include a chip, or may include a chip and another discrete device.

In a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to a seventh aspect, a computer-readable storage medium is provided. The computer-readable storage medium stores instructions. When the instructions are run on a computer, the computer is enabled to perform the DRX management method according to any one of the first aspect or the second aspect.

According to an eighth aspect, a computer program product including instructions is provided. When the computer program product runs on a computer, the computer is enabled to perform the DRX management method according to any one of the first aspect or the second aspect.

According to a ninth aspect, a communication system is provided. The communication system includes the first communication node, the second communication node, and the third communication node in the first aspect or the second aspect.

For a technical effect brought by any design manner in the fifth aspect to the ninth aspect, refer to a technical effect brought by different design manners in the first aspect to the fourth aspect. Details are not described herein again.

### BRIEF DESCRIPTION OF DRAWINGS

FIG. 1 is a diagram of a time domain characteristic of DRX according to an embodiment of this application;
FIG. 2 is a diagram of another time domain characteristic of DRX according to an embodiment of this application;
FIG. 3 is a diagram of still another time domain characteristic of DRX according to an embodiment of this application;
FIG. 4 is a diagram of two DRX cycles in time domain according to an embodiment of this application;
FIG. 5 is a diagram of another two DRX cycles in time domain according to an embodiment of this application;
FIG. 6 is a diagram of a communication system according to an embodiment of this application;
FIG. 7 is a diagram of a structure of a communication apparatus according to an embodiment of this application;
FIG. 8 is a flowchart of a DRX management method according to an embodiment of this application;
FIG. 9 is a flowchart of another DRX management method according to an embodiment of this application;
FIG. 10 is a flowchart of still another DRX management method according to an embodiment of this application;
FIG. 11 is a flowchart of still another DRX management method according to an embodiment of this application;
FIG. 12 is a flowchart of still another DRX management method according to an embodiment of this application;
FIG. 13 is a flowchart of still another DRX management method according to an embodiment of this application; and
FIG. 14 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

First, related technologies in this application are briefly described. The following explanations and descriptions are intended to make embodiments of this application easier to understand, and should not be construed as a limitation on the protection scope claimed in embodiments of this application.

In a DRX mechanism, a terminal device may periodically enter, at some time, a sleep mode (sleep mode) in which the terminal device does not monitor a physical downlink control channel (physical downlink control channel, PDCCH) subframe, but wake up (wake up) from the sleep mode when monitoring is required, to achieve an objective of saving power.

DRX described in embodiments of this application is DRX used when the terminal device is in a radio resource control (radio resource control, RRC) connected (RRC_CONNECTED) state, and may also be referred to as connected DRX (Connected DRX, C-DRX). This is uniformly described herein.

In some implementations, DRX configuration information may be used to configure DRX on duration (On Duration) for the terminal device, and the terminal device may keep a wake-up mode and monitor and receive a PDCCH in the DRX on duration. In the DRX mechanism, the DRX on duration may appear periodically in time domain, so that the terminal device is woken up periodically. The DRX on duration appears periodically, and a plurality of consecutive DRX cycles may be formed in time domain, and each DRX cycle includes one on duration. A time difference between start moments of adjacent DRX on duration in time domain is a length of a DRX cycle. In addition, a time period other than the on duration in the DRX cycle may be referred to as an "Opportunity for DRX" time period.

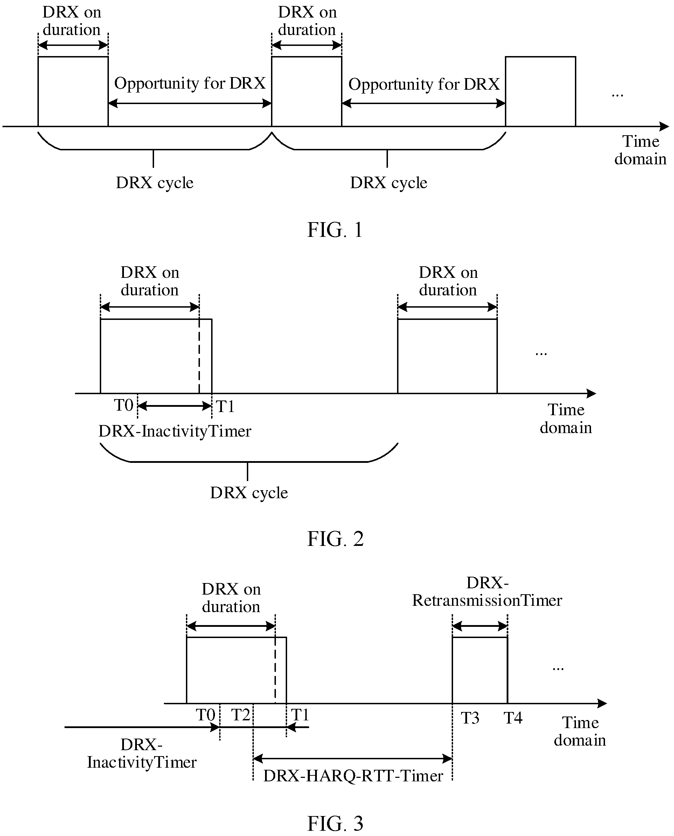

For example, FIG. 1 is a diagram of a time domain characteristic of DRX. As shown in FIG. 1, a time period corresponding to a protruding column in FIG. 1 is DRX on duration. The DRX on duration may be periodic, and a time difference between any two pieces of adjacent DRX on duration is equal. In FIG. 1, three pieces of DRX on duration are used as an example for presentation. A start moment of 1^{st} DRX on duration to a start moment of 2^{nd} DRX on duration is a DRX cycle to which the 1^{st} DRX on duration belongs. The start moment of the 2^{nd} DRX on duration to a start moment of 3^{rd} DRX on duration is a DRX cycle to which the 2^{nd} DRX on duration belongs.

In some implementations, DRX configuration information may indicate a DRX on duration timer (DRX-OnDurationTimer), running time of the DRX-OnDurationTimer is the DRX on duration, and each DRX cycle may correspond to one DRX-OnDurationTimer. The DRX configuration information may indicate a moment at which the DRX-OnDurationTimer is started for the first time and a cycle at which the DRX-OnDurationTimer is repeatedly started subsequently, so that the DRX on duration may appear periodically in time domain.

In some implementations, the DRX configuration information may further indicate a DRX inactivity timer (DRX-InactivityTimer). If the terminal device receives, within the DRX on duration, control information indicating new transmission data (the control information is carried on a PDCCH, and the control information may be control information indicating uplink transmission or downlink transmission), the terminal device may start the DRX-InactivityTimer. In a running time period of the DRX-InactivityTimer, the terminal device continuously monitors the PDCCH. Even if the DRX on duration of a DRX cycle has ended, the DRX-InactivityTimer continues to run until the DRX-InactivityTimer expires. Running time of the DRX-InactivityTimer may exceed a time period to which the DRX on duration belongs.

For example, FIG. 2 is a diagram of another time domain characteristic of DRX. As shown in FIG. 2, a terminal device may receive, at a moment T₀ in DRX on duration, control information indicating new transmission data, and may start a DRX-InactivityTimer at the moment T₀. The DRX-InactivityTimer may stop until a moment T₁, and the moment T₁ may exceed a range of the DRX on duration. The terminal device also maintains a wake-up mode from the moment T₀ to the moment T₁. Time corresponding to a protruding columnar part in FIG. 2 may be considered as time at which the terminal device maintains the wake-up mode.

In some implementations, DRX configuration information may further indicate a DRX hybrid automatic repeat request (hybrid automatic repeat request, HARQ) round trip time (round trip time, RTT) timer (DRX-HARQ-RTT-Timer), and a DRX retransmission timer (DRX-RetransmissionTimer). The DRX hybrid automatic repeat request round trip time timer may include an uplink DRX hybrid automatic repeat request round trip time timer (DRX-HARQ-RTT-TimerUL) and a downlink DRX hybrid automatic repeat request round trip time timer (DRX-HARQ-RTT-TimerDL), and the DRX retransmission timer may include an uplink DRX retransmission timer (DRX-RetransmissionTimerUL) and a downlink DRX retransmission timer (DRX-RetransmissionTimerDL). The DRX-HARQ-RTT-TimerUL and the DRX-RetransmissionTimerUL are used for uplink data transmission, and the DRX-HARQ-RTT-TimerDL and the DRX-RetransmissionTimerDL are used for downlink data transmission.

The downlink data transmission is used as an example. After receiving scheduled downlink data, the terminal device may send, to a network device, a HARQ feedback (feedback) corresponding to the downlink data. If the HARQ feedback corresponding to the downlink data sent by the terminal device to the network device is a negative acknowledgment (negative acknowledgment, NACK), the network device sends retransmitted data to the terminal device after receiving the HARQ feedback. The DRX-HARQ-RTT-TimerDL is designed to reserve time for scheduling the retransmitted data. It may be considered that the network device does not schedule the retransmitted data in a running period of the DRX-HARQ-RTT-TimerDL. The DRX-HARQ-RTT-TimerDL is started after the terminal device sends the HARQ feedback. After the DRX-HARQ-RTT-TimerDL expires, if data corresponding to a HARQ process fails to be decoded, the terminal device starts the DRX-RetransmissionTimerDL, and monitors a PDCCH during running of the DRX-RetransmissionTimerDL, to receive control information indicating retransmission, and schedule the retransmitted data.

In a running period of the DRX-RetransmissionTimerDL, the terminal device monitors the PDCCH, so that the running period of the DRX-RetransmissionTimerDL belongs to a DRX wake-up period. In a running period of the DRX-HARQ-RTT-TimerDL, the terminal device does not need to monitor the PDCCH, so that the running period of the DRX-HARQ-RTT-TimerDL belongs to a DRX sleep period.

For example, FIG. 3 is a diagram of still another time domain characteristic of DRX. As shown in FIG. 3, a terminal device may start a DRX-InactivityTimer at a moment T₀ at which the terminal device receives control information indicating downlink new transmission data, and the DRX-InactivityTimer stops at a moment T₁. The terminal device may further start a DRX-HARQ-RTT-TimerDL at a moment T₂ after receiving the downlink data and sending a HARQ feedback of the downlink data to a network device, and the DRX-HARQ-RTT-TimerDL expires at a moment T₃. If the HARQ feedback is a NACK, the terminal device may start a DRX-RetransmissionTimerDL at a moment T₃, and the DRX-RetransmissionTimerDL may expire at a moment T₄.

Based on the DRX-InactivityTimer, a DRX-HARQ-RTT-Timer (including the DRX-HARQ-RTT-TimerDL and a DRX-HARQ-RTT-TimerUL), and a DRX-RetransmissionTimer (including the DRX-RetransmissionTimerDL and a DRX-RetransmissionTimerUL) that are configured for the terminal device, the terminal device can implement normal data transmission in a DRX mechanism.

Extended reality (Extended Reality, XR) is all real and virtual combined environments and human-machine interaction generated by computer technologies and wearable devices, and includes representative forms such as augmented reality (Augmented Reality, AR), mixed reality (Mixed Reality, MR), and virtual reality (Virtual Reality, VR). A battery life of an XR device greatly affects user experience. How to reduce energy consumption of the XR device to improve the battery life is an urgent problem to be resolved.

XR service data is usually periodic data. Therefore, the foregoing DRX technology with a cycle feature is very suitable for a DRX device. A DRX cycle is set to be the same as or close to a cycle of the XR service data, so that the XR device is in a wake-up state when the XR service data is transmitted, and the XR device is in a sleep mode when the XR service data is not transmitted. In this way, normal transmission of the XR service can be ensured, and the energy consumption of the XR device can be reduced.

However, the XR service data may include a plurality of data streams. For example, downlink XR data includes audio data and video data. Although the audio data and the video data both have cycle characteristics, cycles of the audio data and the video data may be different. For example, a transmission cycle of the audio data is approximately 20 ms, and a transmission cycle of the video data is approximately 33.3 ms, 16.67 ms, or 11.1 ms. Therefore, the XR device may fail to meet a plurality of cycle requirements of the XR service by using the foregoing DRX mechanism. For example, if a receive cycle of DRX is configured based on the video data cycle, a delay may be caused in receiving the audio data. Similarly, if the receive cycle of the DRX is configured based on the audio data cycle, a delay may be caused in receiving video data.

To meet transmission requirements of data with a plurality of different cycles, a theoretical solution is as follows: A plurality of sets of DRX parameters are configured, where the plurality of sets of DRX parameters have different DRX cycles, and the plurality of sets of different DRX cycles may meet data transmission requirements of different cycles. The XR service is used as an example. Two sets of DRX parameters may be configured for the XR device, and DRX cycles of the two sets of DRX parameters respectively match the cycles of the video data and the audio data, to implement low-latency and low-power transmission of the XR service when data with a plurality of cycles coexists.

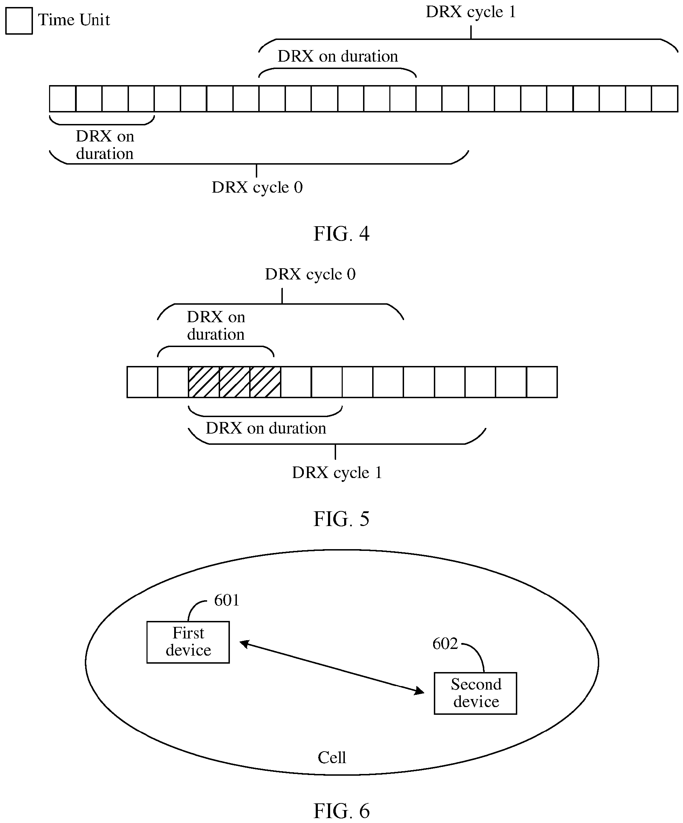

For example, FIG. 4 is a diagram of two DRX cycles in time domain. As shown in FIG. 4, a same device may simultaneously configure DRX of two different cycles, including a DRX cycle 0 and a DRX cycle 1. A start location of the DRX cycle 0 is different from a start location of the DRX cycle 1. As shown in FIG. 4, a difference between the start location of the DRX cycle 0 and the start location of the DRX cycle 1 is eight time units. A cycle length of the DRX cycle 0 may be different from a cycle length of the DRX cycle 1. As shown in FIG. 4, the cycle length of the DRX cycle 0 may be 12 time units, and the cycle length of the DRX cycle 1 may be 16 time units. Duration of DRX on duration in the DRX cycle 0 may be different from duration of DRX on duration in the DRX cycle 1. As shown in FIG. 4, the length of the DRX on duration in the DRX cycle 0 may be four time units, and the length of the DRX on duration in the DRX cycle 1 may be six time units.

When a plurality of different DRX cycles are configured at the same time, DRX on duration in the different DRX cycles may partially overlap in time domain. For example, FIG. 5 is a diagram of another two DRX cycles in time domain. As shown in FIG. 5, the 3^{rd} to the 5^{th} time units from left to right in the figure belong to both DRX on duration of a DRX cycle 0 and DRX on duration of a DRX cycle 1.

In an implementation, different DRX cycles may correspond to different timers. For example, different DRX cycles may correspond to different DRX-InactivityTimers, DRX-HARQ-RTT-Timers, and DRX-RetransmissionTimers. When different cycles correspond to different timers, if a moment at which a terminal device receives control information indicating new transmission data belongs to DRX on duration of a plurality of DRX cycles (in other words, DRX on duration of different DRX cycles overlaps), how to select a timer that corresponds to a specific DRX cycle and that is to be started by the terminal device to perform subsequent data transmission is still an unresolved problem.

To resolve this problem, this application further provides a DRX management method. A network device may indicate, in a plurality of sets of DRX configuration information for a terminal device, a timer to be used by the terminal device, so that a problem that it is difficult for the terminal device to select from timers corresponding to the plurality of sets of DRX configuration information can be overcome.

The following describes an application scenario of the DRX management method provided in this application. The DRX management method provided in this application may be applied to a scenario in which a network device communicates with a terminal device, and the network device and the terminal device are located in a same cell (cell). For example, FIG. 6 is a diagram of a communication system. The communication system may include a first device 601 and a second device 602. The first device 601 and the second device 602 are located in a same cell.

Optionally, the first device 601 may be a network device, and the second device 602 may be a terminal device.

It should be understood that the network architecture and the service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The network device in embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) network, may be an NB (NodeB) in WCDMA (wideband code division multiple access, wideband code division multiple access), may be an evolved NodeB (evolved NodeB, eNB, or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or one or a group of (including a plurality of antenna panels) antenna panels of a base station in a 5G system. Alternatively, the network device may be a network node that forms a gNodeB or a transmission point, for example, a baseband unit (baseband unit, BBU) or a distributed unit (distributed unit, DU). This is not limited in embodiments of this application.

The terminal device in embodiments of this application may also be referred to as user equipment (User Equipment, UE), an access terminal, a subscriber unit, a subscriber station, a mobile station, a remote station, a remote terminal, a mobile device, a user terminal, a terminal device, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device (for example, an XR device), a terminal in a future 5G network, a terminal in a future evolved public land mobile communication network (public land mobile network, PLMN), or the like. This is not limited in embodiments of this application.

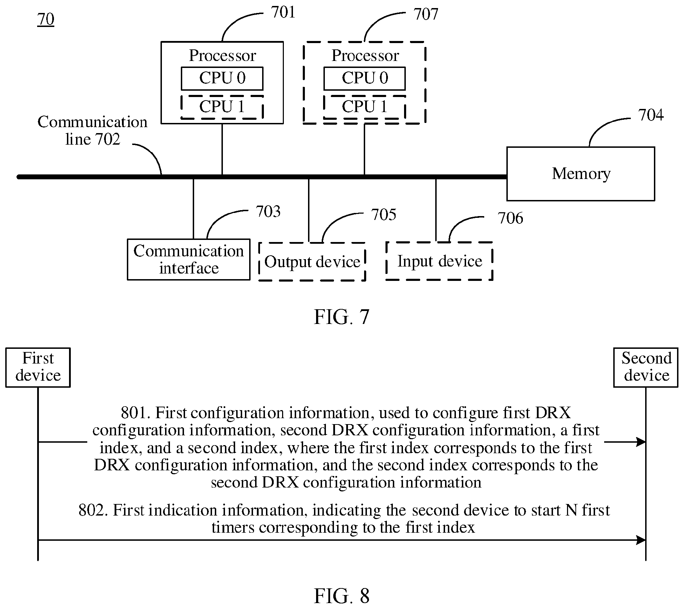

Optionally, the first device and the second device in embodiments of this application may be communication apparatuses, and the first device and the second device may each use a composition structure shown in FIG. 7 or each include components shown in FIG. 7. FIG. 7 is a diagram of a structure of a communication apparatus according to an embodiment of this application. As shown in FIG. 7, the communication apparatus 70 includes one or more processors 701, a communication line 702, and at least one communication interface (in FIG. 7, an example in which the communication interface 703 and one processor 701 are included is only used for description). Optionally, the apparatus may further include a memory 704.

The processor 701 may be a general-purpose central processing unit (central processing unit, CPU), a microprocessor, an application-specific integrated circuit (application-specific integrated circuit, ASIC), or one or more integrated circuits configured to control program execution in the solution of this application.

The communication line 702 may include a path used for communication between different components.

The communication interface 703 may be a transceiver module configured to communicate with another device or communication network, for example, an Ethernet, a RAN, or a wireless local area network (wireless local area network, WLAN). For example, the transceiver module may be an apparatus such as a transceiver or a transceiver machine. Optionally, the communication interface 703 may alternatively be a transceiver circuit located inside the processor 701, and is configured to implement signal input and signal output of the processor.

The memory 704 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may independently exist and is connected to the processor through the communication line 702. The memory may alternatively be integrated with the processor.

The memory 704 is configured to store computer-executable instructions for executing the solutions of this application, and the processor 701 controls the execution. The processor 701 is configured to execute the computer-executable instructions stored in the memory 704, to implement the DRX management method provided in embodiments of this application.

Alternatively, optionally, in this embodiment of this application, the processor 701 may perform functions related to processing in the DRX management method provided in the following embodiments of this application. The communication interface 703 is responsible for communicating with another device or a communication network. This is not specifically limited in this embodiment of this application.

Optionally, the computer-executable instructions in embodiments of this application may also be referred to as application program code. This is not specifically limited in embodiments of this application.

During specific implementation, in an embodiment, the processor 701 may include one or more CPUs, for example, a CPU 0 and a CPU 1 in FIG. 7.

In a specific implementation, in an embodiment, the communication apparatus 70 may include a plurality of processors, for example, the processor 701 and a processor 707 shown in FIG. 7. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

In a specific implementation, in an embodiment, the communication apparatus 70 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, a projector (projector), or the like. The input device 706 communicates with the processor 701, and may receive an input from a user in a plurality of manners. For example, the input device 706 may be a mouse, a keyboard, a touchscreen device, a sensing device, or the like.

The communication apparatus 70 may also be referred to as a communication device sometimes, and may be a general-purpose device or a dedicated device. A type of the communication apparatus 70 is not limited in this embodiment of this application.

The following describes a DRX management method provided in embodiments of this application with reference to the accompanying drawings. Devices in the following embodiments may have components shown in FIG. 7. Actions, terms, and the like in embodiments of this application may be mutually referenced. This is not limited. In embodiments of this application, a name of a message/signaling, a parameter name in the message/signaling, or the like is merely an example. In specific implementation, another name may alternatively be used. This is not limited.

A flowchart of a DRX management method provided in an embodiment of this application may be shown in FIG. 8. Refer to FIG. 8. The DRX management method may include the following step 801 and step 802.

Step 801: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Optionally, the first device may be a network device, the second device may be a terminal device, and the first device and the second device are located in a same cell.

The first index may be considered as an index of the first DRX configuration information, and the second index may be considered as an index of the second DRX configuration information.

In this embodiment of this application, the first configuration information may be used to configure a plurality of pieces of DRX configuration information and a plurality of indexes corresponding to the plurality of pieces of configuration information. In step 801, an example in which the first configuration information is used to configure the first DRX configuration information, the second DRX configuration information, the first index, and the second index is used for description. Optionally, the first configuration information may be further used to configure third DRX configuration information and a third index, and the third index corresponds to the third DRX configuration information.

Optionally, different DRX configuration information corresponds to different DRX cycles, and each piece of DRX configuration information indicates a parameter related to one DRX cycle, for example, duration and a location of the DRX cycle, duration and a location of DRX on duration, and a parameter of another timer.

Optionally, the first DRX configuration information includes a first cycle length and a parameter of a first DRX-OnDurationTimer. The first cycle length is duration of a DRX cycle corresponding to the first DRX configuration information, and the parameter of the first DRX-OnDurationTimer includes a start moment of the first DRX-OnDurationTimer and duration of the first DRX-OnDurationTimer. Therefore, a time-domain location of the DRX cycle corresponding to the first DRX configuration information may be determined based on the first cycle length and the parameter of the first DRX-OnDurationTimer.

Optionally, the first DRX configuration information further includes at least one of the following information: a parameter of a first DRX-InactivityTimer, a parameter of a first DRX-HARQ-RTT-TimerDL, a parameter of a first DRX-RetransmissionTimerDL, a parameter of a first DRX-HARQ-RTT-TimerUL, and a parameter of a first DRX-RetransmissionTimerUL. The first DRX-InactivityTimer may be used for uplink or downlink data transmission, the first DRX-HARQ-RTT-TimerDL and the first DRX-RetransmissionTimerDL are used for the downlink data transmission, and the first DRX-HARQ-RTT-TimerUL and the first DRX-RetransmissionTimerUL are used for the uplink data transmission.

Optionally, the parameter of the first DRX-InactivityTimer includes duration of the first DRX-InactivityTimer, the parameter of the first DRX-HARQ-RTT-TimerDL includes duration of the first DRX-HARQ-RTT-TimerDL, the parameter of the first DRX-RetransmissionTimerDL includes duration of the first DRX-RetransmissionTimerDL, the parameter of the first DRX-HARQ-RTT-TimerUL includes duration of the first DRX-HARQ-RTT-TimerUL, and the parameter of the first DRX-RetransmissionTimerUL includes duration of the first DRX-Retransmission TimerUL.

Optionally, the second DRX configuration information includes a second cycle length and a parameter of a second DRX-OnDurationTimer. The second cycle length is duration of a DRX cycle corresponding to the second DRX configuration information, and the parameter of the second DRX-OnDurationTimer includes a start moment of the second DRX-OnDurationTimer and duration of the second DRX-OnDurationTimer. Therefore, a time-domain location of the DRX cycle corresponding to the second DRX configuration information may be determined based on the second cycle length and the parameter of the second DRX-OnDurationTimer.

Optionally, the second DRX configuration information further includes at least one of the following information: a parameter of a second DRX-InactivityTimer, a parameter of a second DRX-HARQ-RTT-TimerDL, a parameter of a second DRX-RetransmissionTimerDL, a parameter of a second DRX-HARQ-RTT-TimerUL, and a parameter of a second DRX-RetransmissionTimerUL. Content of the parameter included in the second DRX configuration information is similar to content of the parameter included in the first DRX configuration information. For details, refer to the foregoing description of the parameter in the first DRX configuration information. Details are not described herein again.

Step 802: The first device sends first indication information to the second device, and correspondingly, the second device receives the first indication information from the first device. The first indication information indicates the second device to start N first timers corresponding to the first index, and N is a positive integer greater than or equal to 1.

Optionally, the first configuration information may be used to configure a plurality of pieces of DRX configuration information, the plurality of pieces of DRX configuration information correspond to a plurality of indexes, and the first index indicated by the first indication information may be considered as any one of the plurality of indexes corresponding to the plurality of pieces of DRX configuration information. In an embodiment corresponding to FIG. 8, an example in which the first indication information is the index of the first DRX configuration information configured in step 801 is used for description.

For example, three pieces of DRX configuration information, namely, DRX 1, DRX 2, and DRX 3, are configured via the first configuration information. DRX 1 corresponds to an index 1, DRX 2 corresponds to an index 2, and DRX 3 corresponds to an index 3. It is assumed that the first indication information indicates the index 2. In this way, the index 2 is the first index, and DRX 2 is the first DRX configuration information.

Because the first index is the index corresponding to the first DRX configuration information, the N first timers corresponding to the first index are timers indicated by the first DRX configuration information.

Optionally, the N first timers may include at least one of the following: the first DRX-InactivityTimer, the first DRX-HARQ-RTT-TimerDL, the first DRX-RetransmissionTimerDL, the first DRX-HARQ-RTT-TimerUL, and the first DRX-RetransmissionTimerUL.

Optionally, the N first timers are timers used for data transmission, and the first indication information indicates the second device to start the N first timers. It is equivalent to that the first indication information indicates the second device to start the timer that is used for data transmission and that is indicated by the first DRX configuration information. Based on this, even if a total of two sets of configuration information, namely, the first DRX configuration information and the second DRX configuration information, are configured in the second device, during data transmission, the second device may start, based on the indication of the first indication information, the timer corresponding to the first DRX configuration information, so that a problem that a to-be-selected timer is unclear is overcome.

Based on the foregoing DRX management method, when configuring a plurality of sets of DRX configuration information for the second device, the first device may configure an index corresponding to each set of DRX configuration information. Then, the first device may further indicate the second device to start the first timer corresponding to the first index in a plurality of indexes. The first timer is the timer used for the data transmission, so that a problem of how the second device determines, when the second device configures the plurality of sets of DRX configuration information, a to-be-used timer corresponding to a specific set of DRX configuration information can be resolved according to the method.

### For the foregoing step 801:

Optionally, the first configuration information sent by the first device to the second device may be radio resource control (Radio resource control, RRC) signaling.

Optionally, the first configuration information may include one or more pieces of configuration information. The one or more pieces of configuration information jointly indicate a plurality of sets of DRX configuration information (for example, the first DRX configuration information and the second DRX configuration information).

For example, the first configuration information may include a medium access control (Media access control, MAC) cell group configuration information element (MAC-CellGroupConfig information element). Content of the MAC-CellGroupConfig information element may be shown as follows:

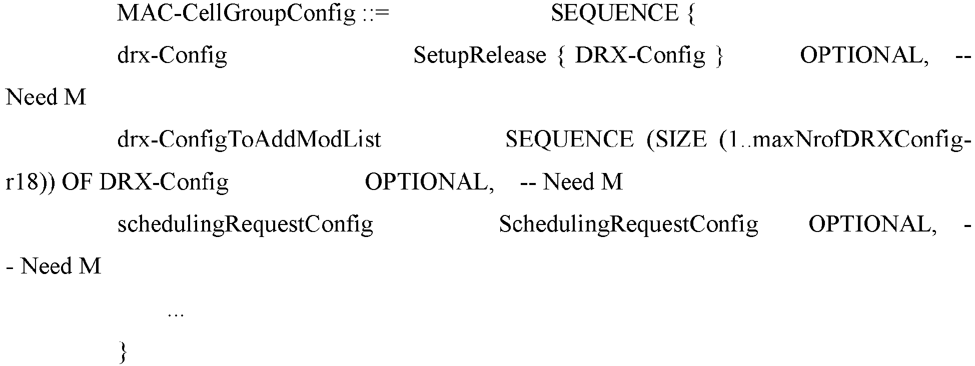

maxNrofDRXConfig-r18 may be a preconfigured parameter, and indicates a maximum quantity of configurable DRX configuration information. drx-ConfigToAddModList may indicate a quantity of pieces of actually configured DRX. The quantity of pieces of DRX is not greater than maxNrofDRXConfig-r18. For example, when a variable corresponding to the parameter is 2, it indicates that two sets of DRX configuration information are configured for the second device, in other words, two pieces of DRX-Config signaling are included. The DRX-Config singaling may be used to configure one piece of DRX configuration information (for example, the first DRX configuration information or the second DRX configuration information).

The DRX-Config may correspond to a DRX configuration information element (DRX-Config information element), and content of the DRX-Config information element may be shown as follows:

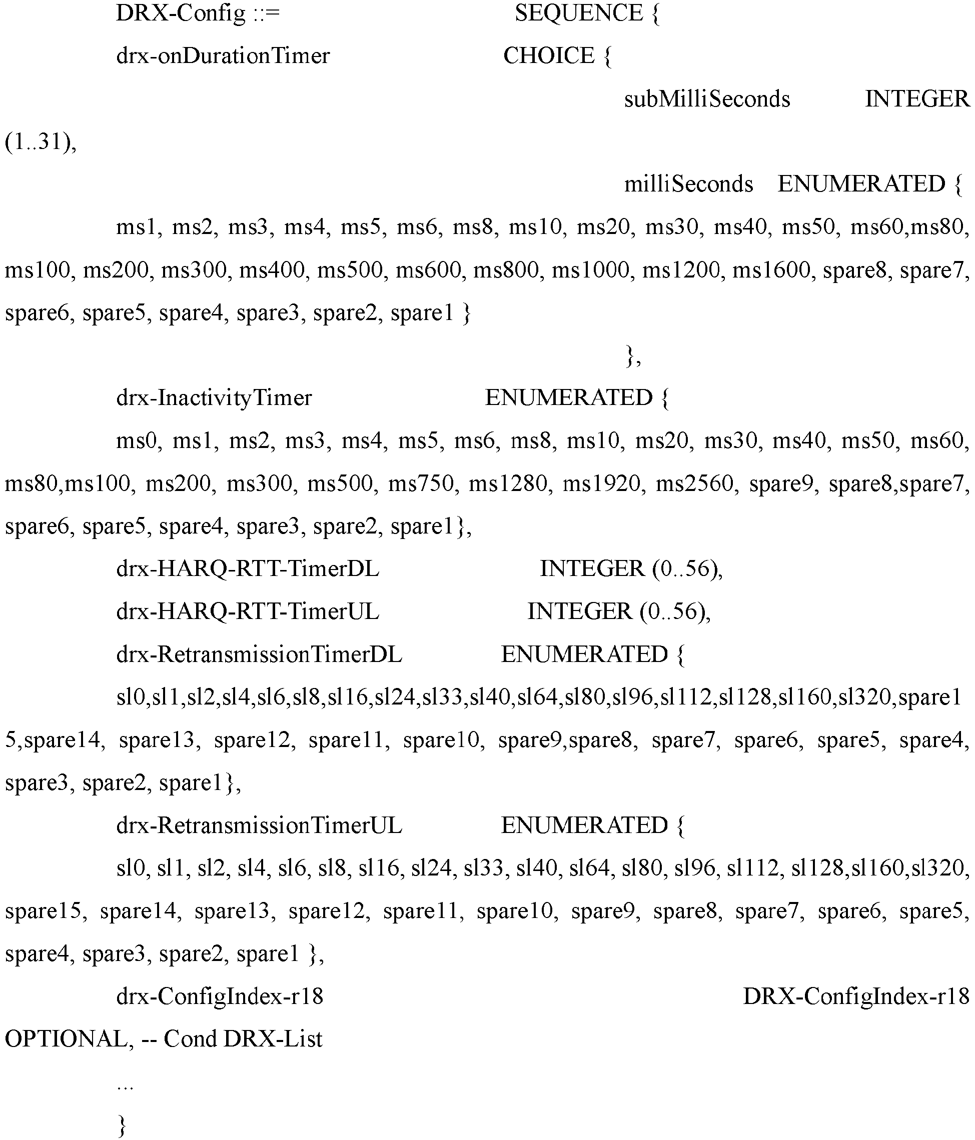

It can be learned from the content of the DRX-Config information element that the DRX-Config information element may be used to configure parameters of the drx-onDurationTimer, the drx-InactivityTimer, the drx-HARQ-RTT-TimerDL, the drx-HARQ-RTT-TimerUL, the drx-RetransmissionTimerDL, and the drx-RetransmissionTimerUL.

In addition, the drx-ConfigIndex-r18 in the DRX-Config information element may indicate an index corresponding to the DRX configuration information.

The drx-ConfigIndex-r18 may correspond to a DRX configuration index information element (DRX-ConfigIndex information element), and content of the DRX-ConfigIndex information element may be shown as follows:

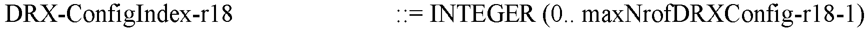

In this example, the first configuration information may include the MAC-CellGroupConfig information element, the DRX-Config information element, and the DRX-ConfigIndex information element. It should be understood that the first configuration information may be used to configure a plurality of pieces of DRX configuration information, so that the first configuration information may include a plurality of DRX-Config information elements and a plurality of DRX-ConfigIndex information elements.

### For the foregoing step 802:

Optionally, the first indication information may directly or indirectly indicate the second device to start the N first timers corresponding to the first index.

In a possible implementation, the first indication information may include the first index. Therefore, the second device may determine, based on the first indication information including the first index, to start the N first timers corresponding to the first index.

In another possible implementation, the first indication information may include a first parameter, the first parameter may indicate a first condition, and the first index meets the first condition. The first condition may be agreed upon by the first device and the second device in advance. The first indication information only needs to carry the first parameter, and the second device may determine the first condition based on the first parameter. Further, the second device may determine the first index that meets the first condition, and then may determine to start the N first timers corresponding to the first index.

Optionally, the first condition may be a value of an index number. For example, the first condition is an index with a smallest or largest index number in a plurality of indexes. In this case, two different first conditions of "a smallest index number in a plurality of indexes" and "a largest index number in a plurality of indexes" may be respectively indicated by using two different values (for example, 0 and 1), so that the first parameter may be one (0 or 1) of the two different values. "A plurality of indexes" may be indexes of all configured DRX, or may be indexes of DRX whose activation time overlaps. The activation time may include time at which any timer in the drx-ondurationTimer, the drx-InactivityTimer, the drx-retransmissionTimerUL, and the drx-retransmissionTimerDL is started. For example, three pieces of DRX are configured, and activation time of two pieces of DRX overlaps. The first condition may be a largest or smallest index selected from indexes of the three pieces of DRX, or a largest or smallest index selected from indexes of the two pieces of DRX whose activation time overlaps.

Optionally, the first condition may also be about duration of a timer. For example, the first condition is an index of a timer whose duration is the longest or the shortest in a plurality of timers of a same type. Timers that have a same function and that correspond to different DRX configuration information are timers of a same type. For example, different DRX-InactivityTimers corresponding to different DRX configuration information are timers of a same type. "A plurality of timers of a same type" may be timers of a same type corresponding to all configured DRX, or may be timers of a same type corresponding to DRX whose activation time overlaps. For example, three pieces of DRX are configured, and activation time of two pieces of DRX overlaps. The first condition may be an index of a timer, with the longest duration or the shortest duration, selected from timers of a same type (for example, drx-InactivityTimers) corresponding to the three pieces of DRX, or an index of a timer, with the longest duration or the shortest duration, selected from timers of a same type corresponding to the two pieces of DRX whose activation time overlaps. In this case, an implementation in which the first parameter indicates the first condition is similar to an implementation in the previous paragraph (for example, 0 indicates a timer with the shortest duration, and 1 indicates a timer with the longest duration). Details are not described herein again.

Optionally, the first indication information may be carried in second configuration information. The second configuration information and the first configuration information are same configuration information, or the second configuration information and the first configuration information are different configuration information.

When the second configuration information and the first configuration information are the same configuration information, it is equivalent to that when the first device configures a plurality of pieces of DRX configuration information for the second device, the first device also indicates a first timer that corresponds to a specific piece of DRX configuration information and that is to be subsequently started by the second device.

For example, the first configuration information includes the MAC-CellGroupConfig information element, and the MAC-CellGroupConfig information element may carry the first index. For example, content of the MAC-CellGroupConfig information element may be shown as follows:

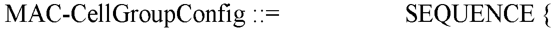

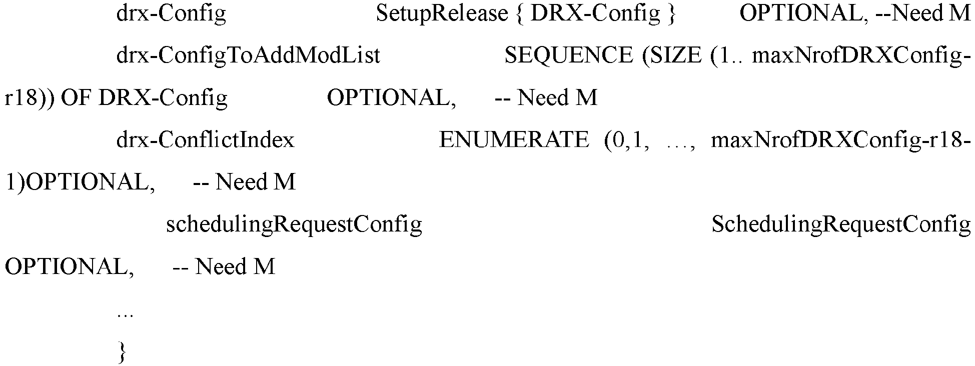

The drx-ConflictIndex ENUMERATE (0, 1, ..., maxNrofDRXConfig-r18-1) may be used to carry the first index, and an index number of the first index may be carried in brackets following ENUMERATE.

For example, the first configuration information includes the MAC-CellGroupConfig information element, and the MAC-CellGroupConfig information element may carry the first parameter indicating the first condition. For another example, content of the MAC-CellGroupConfig information element may be shown as follows:

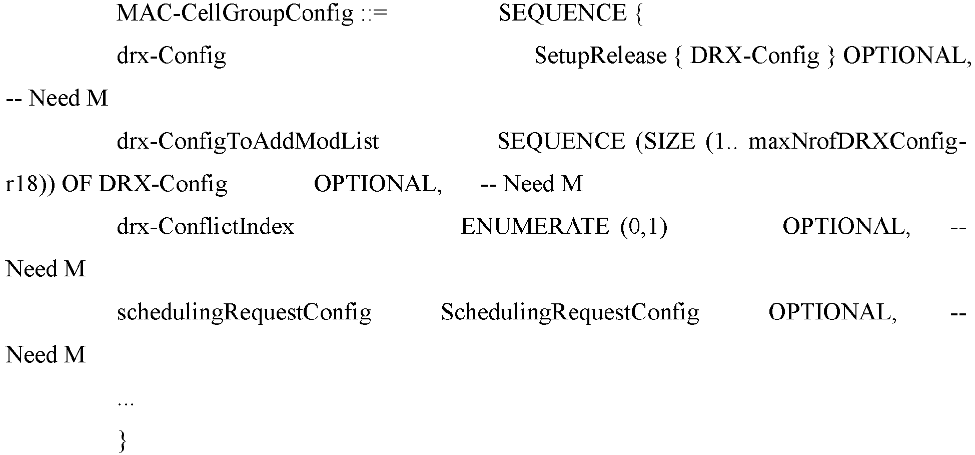

The drx-ConflictIndex may carry the first parameter indicating the first condition, and the first parameter may be carried in brackets following ENUMERATE. For example, ENUMERATE (0) may indicate that the first condition is the index of the timer with the shortest duration in the plurality of timers of the same type, and ENUMERATE (1) may indicate that the first condition is the index of the timer with the longest duration in the plurality of timers of the same type.

When the second configuration information and the first configuration information are not the same configuration information, it is equivalent to that after the first device configures a plurality of pieces of DRX configuration information for the second device, the first device indicates, based on the second configuration information, a first timer that corresponds to a specific piece of DRX configuration information and that is to be subsequently started by the second device. For content and a manner of the indication, refer to the foregoing description. Details are not described herein again.

Optionally, data transmission between the first device and the second device may be dynamic scheduling, in other words, data transmission is indicated based on downlink control information (downlink control information, DCI).

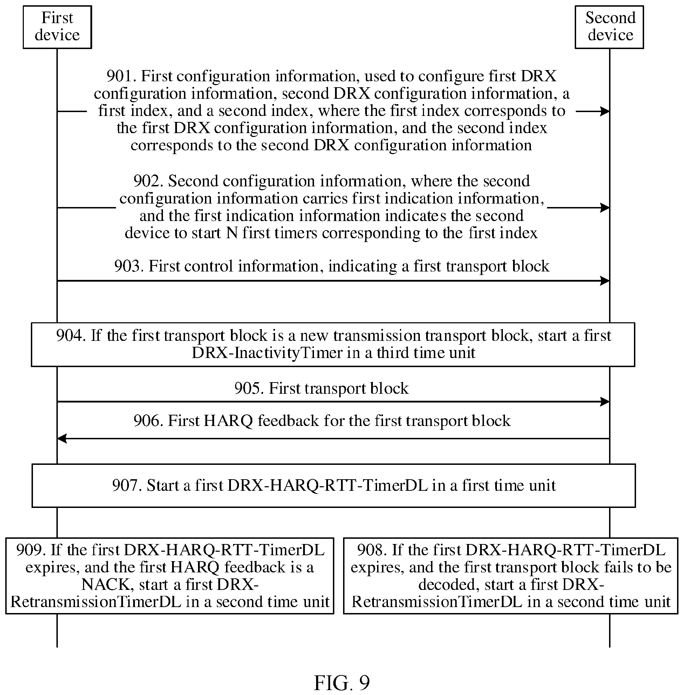

In a possible implementation, an example in which data transmission between the first device and the second device is dynamic scheduling, and the first indication information is carried in the second configuration information is used. FIG. 9 is a flowchart of another DRX management method according to this application. As shown in FIG. 9, the DRX management method may include step 901 to step 909.

Step 901: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Step 901 is completely the same as step 801. For details, refer to related descriptions of step 801.

Step 902: The first device sends second configuration information to the second device, and correspondingly, the second device receives the second configuration information from the first device. The second configuration information carries first indication information, the first indication information indicates the second device to start N first timers corresponding to the first index, and N is a positive integer greater than or equal to 1.

For content of the first indication information in step 902, refer to the descriptions in step 802. Details are not described herein again.

Step 903: The first device sends first control information to the second device, and correspondingly, the second device receives the first control information from the first device. The first control information may indicate a first transport block.

The first transport block is a transport block corresponding to downlink transmission.

Optionally, the first control information may be DCI indicating the downlink transmission.

Step 904: If the first transport block is a new transmission transport block, the first device and the second device each start a first DRX-InactivityTimer in a third time unit, where the third time unit is an initial time unit after a time unit corresponding to a PDCCH that carries the first control information.

The PDCCH may correspond to at least one time unit, and the initial time unit after the time unit corresponding to the PDCCH is a next time unit of a last time unit in the at least one time unit corresponding to the PDCCH. For example, the time unit corresponding to the PDCCH may include a time unit 1, a time unit 2, and a time unit 3. In this case, the initial time unit after the time unit corresponding to the PDCCH is a next time unit of the time unit 3, namely, a time unit 4.

In embodiments of this application, time units are obtained through division based on time domain, and a division result of the time units is known by both the first device and the second device in advance. This is uniformly described herein. Optionally, the time unit in embodiments of this application may be a frame, a subframe, a slot, a sub-slot, a symbol, or the like.

Optionally, the first device locally also includes a plurality of pieces of DRX configuration information (for example, the first DRX configuration information and the second DRX configuration information) configured by the first device for the second device. According to a DRX mechanism, the first device and the second device are synchronized in same DRX cycles.

Therefore, in the initial time unit after the time unit corresponding to the PDCCH that carries the first control information, the first device and the second device each start the local first DRX-InactivityTimer in the third time unit, to keep state synchronization.

Step 905: The first device sends the first transport block to the second device, and correspondingly, the second device receives the first transport block from the first device.

It should be understood that the first control information may indicate resource information of the first transport block. Therefore, the first device and the second device subsequently schedule the first transport block on a corresponding resource.

Step 906: The second device sends a first HARQ feedback to the first device, and correspondingly, the first device receives the first HARQ feedback from the second device. The first HARQ feedback is a HARQ feedback of the second device for the first transport block.

The first HARQ feedback is sent after the second device completes receiving the first transport block from the first device, and the first HARQ feedback may be used to feed back a decoding state of the second device on the first transport block.

Step 907: The first device and the second device each start a first DRX-HARQ-RTT-TimerDL in a first time unit, where the first time unit is an initial time unit after the second device sends the first HARQ feedback, and the first time unit is also an initial time unit after the first device receives the first HARQ feedback.

In embodiments of this application, a time unit in which the second device sends the first HARQ feedback and a time unit in which the first device receives the first HARQ feedback are a same time unit. Therefore, the initial time unit after the second device sends the first HARQ feedback and the initial time unit after the first device receives the first HARQ feedback are also a same time unit (namely, the first time unit).

Step 908: If the first DRX-HARQ-RTT-TimerDL expires and the first transport block fails to be decoded, the second device may start a first DRX-RetransmissionTimerDL in a second time unit, where the second time unit is an initial time unit after the first DRX-HARQ-RTT-TimerDL expires.

It should be understood that if the second device fails to decode the first transport block, the first transport block needs to be subsequently retransmitted. After the first DRX-HARQ-RTT-TimerDL expires, the first device may schedule retransmitted data. The second device starts the first DRX-RetransmissionTimerDL, to keep a wake-up mode, and may monitor and receive control information used for retransmission, to receive the retransmitted data.

Step 909: If the first DRX-HARQ-RTT-TimerDL expires, and the first HARQ feedback is a NACK, the first device starts the first DRX-RetransmissionTimerDL in the second time unit, where the second time unit is the initial time unit after the first DRX-HARQ-RTT-TimerDL expires.

In embodiments of this application, when the second device successfully decodes the first transport block, the first HARQ feedback is an acknowledgment ACK feedback; when the terminal device fails to decode the first transport block, the HARQ feedback is a negative acknowledgment NACK feedback.

After receiving the first HARQ feedback that is the NACK, the first device may determine that retransmission needs to be performed subsequently. After the first DRX-HARQ-RTT-TimerDL expires, the first device may schedule the retransmitted data. Therefore, the first device also starts the first DRX-RetransmissionTimerDL.

The first device and the second device each start the first DRX-RetransmissionTimerDL synchronously.

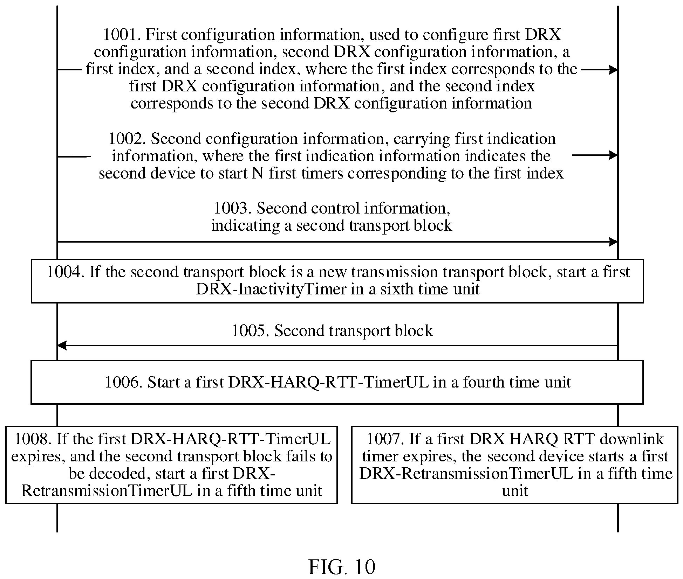

In a possible implementation, an example is still used in which data transmission between the first device and the second device is dynamic scheduling, and the first indication information is carried in the second configuration information. FIG. 10 is a flowchart of still another DRX management method according to this application. As shown in FIG. 10, the DRX management method may include step 1001 to step 1008.

Step 1001: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Step 1002: The first device sends second configuration information to the second device, and correspondingly, the second device receives the second configuration information from the first device. The second configuration information carries first indication information, the first indication information indicates the second device to start N first timers corresponding to the first index, and N is a positive integer greater than or equal to 1.

Step 1001 is similar to step 901, and step 1002 is similar to step 902. For details, refer to the foregoing descriptions. Details are not described herein again.

Step 1003: The first device sends second control information to the second device, and correspondingly, the second device receives the second control information from the first device. The second control information indicates a second transport block.

The second control information may be DCI indicating uplink transmission, and the second transport block may be a transport block corresponding to uplink data.

Step 1004: If the second transport block is a new transmission transport block, the first device and the second device each start a first DRX-InactivityTimer in a sixth time unit, where the sixth time unit is an initial time unit after a time unit corresponding to a PDCCH for transmitting the second control information.

Both the first device and the second device each start the local first DRX-InactivityTimer in the sixth time unit, to keep state synchronization.

Step 1005: The second device sends the second transport block to the first device, and correspondingly, the first device receives the second transport block from the second device.

It should be understood that the second control information may indicate resource information of the second transport block. Therefore, the first device and the second device subsequently schedule the second transport block on a corresponding resource.

Step 1006: The first device and the second device each start a first DRX-HARQ-RTT-TimerUL in a fourth time unit, where the fourth time unit is an initial time unit after a time unit corresponding to a physical uplink shared channel (Physical uplink shared channel, PUSCH) for sending the second transport block.

For uplink data transmission, after receiving the second transport block, the first device may not send a HARQ feedback to the second device.

Step 1007: If the first DRX-HARQ-RTT-TimerUL expires, the second device starts a first DRX-RetransmissionTimerUL in a fifth time unit, where the fifth time unit is an initial time unit after the first DRX-HARQ-RTT-TimerUL expires.

The second device may monitor the control information within start time of the first DRX-RetransmissionTimerUL.

Step 1008: If the first DRX-HARQ-RTT-TimerUL expires and the second transport block fails to be decoded, the first device starts the first DRX-RetransmissionTimerUL in a fifth time unit, where the fifth time unit is the initial time unit after the first DRX-HARQ-RTT-TimerUL expires.

Optionally, when data transmission between the first device and the second device is dynamic scheduling, the first indication information may be further carried in control information indicating data transmission. Alternatively, when data transmission between the first device and the second device is semi-persistent scheduling, the first indication information may be carried in control information for activating data transmission.

For example, for dynamic scheduling data transmission, the first indication information may be carried in control information indicating uplink/downlink data transmission. For transmission of a downlink semi-persistent scheduling (semi-persistent scheduling, SPS), the first indication information may be carried in control information for activating the SPS. For transmission of an uplink configuration grant (Configured Grant, CG) type 2 (type 2), the first indication information may be carried in activation control information for activating the CG type 2.

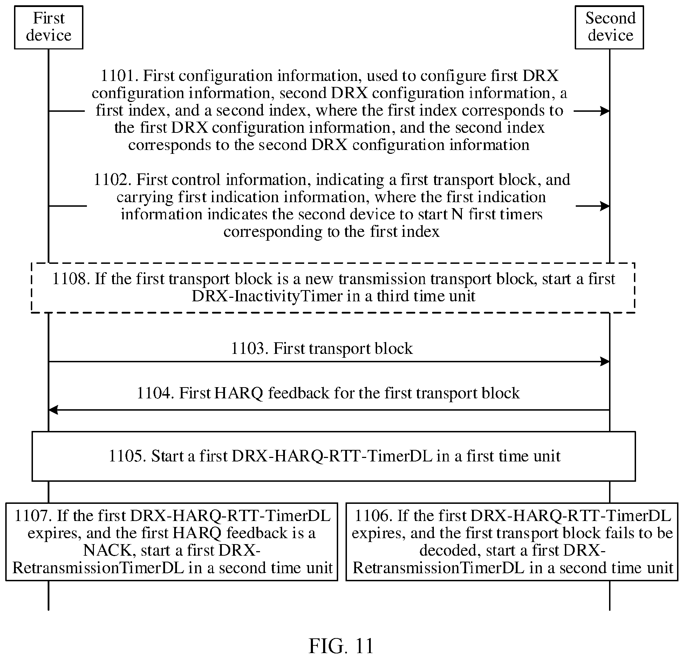

In a possible implementation, an example in which a data scheduling manner is dynamic or semi-persistent and the first indication information is carried in the first control information is used. FIG. 11 is a flowchart of still another DRX management method according to this application. As shown in FIG. 11, the DRX management method may include step 1101 to step 1107.

Step 1101: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Step 1101 is completely the same as step 801. For details, refer to related descriptions of step 801.

Step 1102: The first device sends first control information to the second device, and correspondingly, the second device receives the first control information from the first device. The first control information indicates a first transport block. In addition, the first control information carries first indication information, the first indication information indicates the second device to start N first timers corresponding to the first index, and N is a positive integer greater than or equal to 1.

For content of the first indication information in step 1102, refer to descriptions in step 802. For content of the first transport block in step 1102, refer to descriptions in step 903. Details are not described herein again.

Optionally, in a scenario in which data is dynamically scheduled, the first control information may be DCI indicating downlink scheduling information.

Optionally, in a downlink SPS scheduling scenario of data, the first control information may be DCI that activates transmission and indicates scheduling information.

Step 1103: The first device sends the first transport block to the second device, and correspondingly, the second device receives the first transport block from the first device.

Step 1104: The second device sends a first HARQ feedback to the first device, and correspondingly, the first device receives the first HARQ feedback from the second device. The first HARQ feedback is a HARQ feedback of the second device for the first transport block.

Step 1105: The first device and the second device each start a first DRX-HARQ-RTT-TimerDL in a first time unit, where the first time unit is an initial time unit after the second device sends the first HARQ feedback, and the first time unit is also an initial time unit after the first device receives the first HARQ feedback.

Step 1106: If the first DRX-HARQ-RTT-TimerDL expires and the first transport block fails to be decoded, the second device may start a first DRX-RetransmissionTimerDL in a second time unit, where the second time unit is an initial time unit after the first DRX-HARQ-RTT-TimerDL expires.

Step 1107: If the first DRX-HARQ-RTT-TimerDL expires, and the first HARQ feedback is a NACK, the first device starts the first DRX-RetransmissionTimerDL in a second time unit, where the second time unit is an initial time unit after the first DRX-HARQ-RTT-TimerDL expires.

Step 1103 is similar to step 905, and reference may be made to the description of step 905. Step 1104 is similar to step 906, and reference may be made to the description of step 906. Step 1105 is similar to step 907, and reference may be made to the description of step 907. Step 1106 is similar to step 908, and reference may be made to the description of step 908. Step 1107 is similar to step 909, and reference may be made to the description of step 909. This is uniformly described herein, and details are not described again.

Optionally, if the first control information is used to activate SPS transmission, the first transport block is periodically scheduled based on an SPS cycle configuration. Therefore, the first device and the second device do not need to each start a first DRX-InactivityTimer.

Optionally, if the first control information is control information indicating dynamic scheduling of downlink data, before step 1103, the method may further include the following step: Step 1108: If the first transport block is a new transmission transport block, the first device and the second device each start the first DRX-InactivityTimer in a third time unit, where the third time unit is an initial time unit after a time unit corresponding to a PDCCH carrying the first control information. For step 1108, refer to related descriptions of step 904. Details are not described herein again.

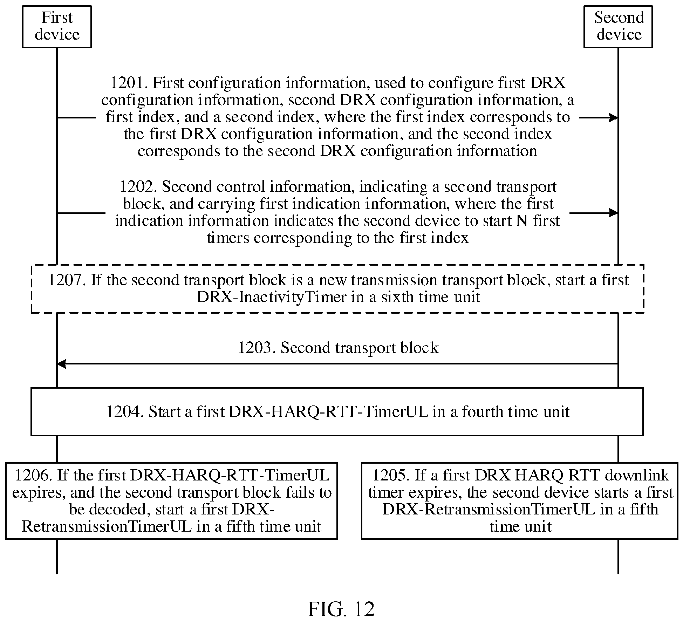

In a possible implementation, an example in which a data scheduling manner is dynamic or semi-persistent and the first indication information is carried in the second control information is used. FIG. 12 is a flowchart of still another DRX management method according to this application. As shown in FIG. 12, the DRX management method may include step 1201 to step 1206.

Step 1201: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Step 1101 is completely the same as step 801. For details, refer to related descriptions of step 801.

Step 1202: The first device sends second control information to the second device, and correspondingly, the second device receives the second control information from the first device. The second control information indicates a second transport block. In addition, the second control information carries first indication information, the first indication information indicates the second device to start N first timers corresponding to the first index, and N is a positive integer greater than or equal to 1.

For content of the first indication information in step 1202, refer to descriptions in step 802. For content of the second transport block in step 1202, refer to descriptions in step 1003. Details are not described herein again.

Step 1203: The second device sends the second transport block to the first device, and correspondingly, the first device receives the second transport block from the second device.

Step 1204: The first device and the second device each start a first DRX-HARQ-RTT-TimerUL in a fourth time unit, where the fourth time unit is an initial time unit after a time unit corresponding to a physical uplink shared channel (Physical uplink shared channel, PUSCH) for sending the second transport block.

Step 1205: If the first DRX-HARQ-RTT-TimerUL expires, the second device starts the first DRX-RetransmissionTimerUL in a fifth time unit, where the fifth time unit is an initial time unit after the first DRX-HARQ-RTT-TimerUL expires.

Step 1206: If the first DRX-HARQ-RTT-TimerUL expires and the second transport block fails to be decoded, the first device starts the first DRX-RetransmissionTimerUL in a fifth time unit, where the fifth time unit is the initial time unit after the first DRX-HARQ-RTT-TimerUL expires.

Step 1203 is similar to step 1005, and reference may be made to the description of step 1005. Step 1204 is similar to step 1006, and reference may be made to the description of step 1006. Step 1205 is similar to step 1007, and reference may be made to the description of step 1007. Step 1206 is similar to step 1008, and reference may be made to the description of step 1008. This is uniformly described herein, and details are not described again.

Optionally, if the second control information is used to activate transmission of a CG type 2, the second transport block is periodically scheduled based on a CG cycle configuration. Therefore, the first device and the second device do not need to each start a first DRX-InactivityTimer.

Optionally, if the second control information is control information indicating dynamic scheduling of uplink data, before step 1103, the method may further include the following step: Step 1207: If the second transport block is a new transmission transport block, the first device and the second device each start the first DRX-InactivityTimer in a sixth time unit, where the sixth time unit is an initial time unit after a time unit corresponding to a PDCCH for transmitting the second control information. For step 1207, refer to related descriptions of step 1004. Details are not described herein again.

Optionally, in the method embodiment corresponding to FIG. 11 or FIG. 12, the first indication information in the first control information or the second control information may directly include the first index, and an indirect indication solution is not used.

Optionally, the first control information or the second control information may be DCI, and the first control information or the second control information may indicate the first index in a DCI format (format).

Optionally, for transmission of an uplink CG type 1 in semi-persistent scheduling, all transmission resources are configured by using configuration information, and are directly activated after being configured, without the need of additional control information for activation. In this scenario, the first indication information may be carried in configuration information for configuring the transmission of the uplink CG type 1.

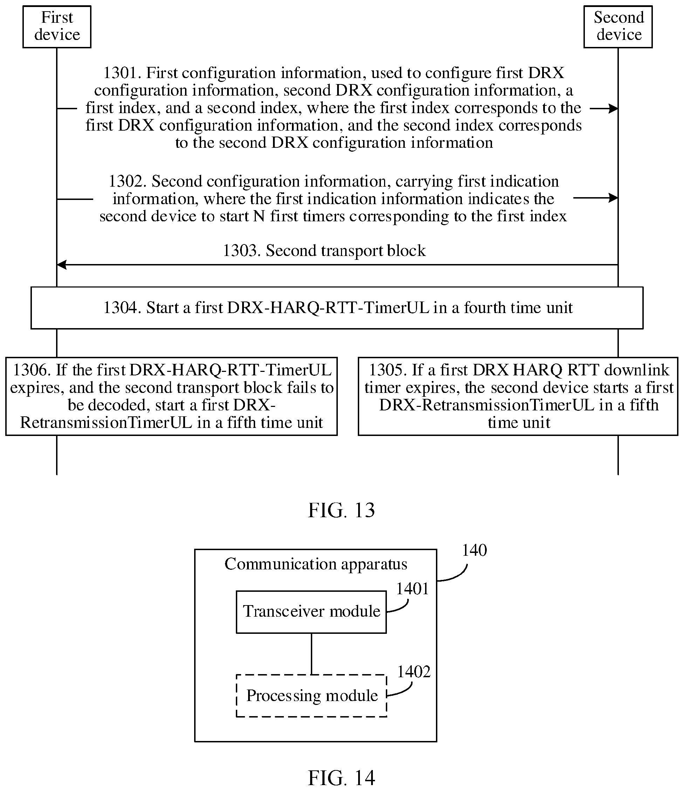

In a possible implementation, an example in which a data scheduling manner is the uplink CG type 1 in semi-persistent scheduling, and the first indication information is carried in the second control information is used. FIG. 13 is a flowchart of still another DRX management method according to this application. As shown in FIG. 13, the DRX management method may include step 1301 to step 1306.

Step 1301: A first device sends first configuration information to a second device, and correspondingly, the second device receives the first configuration information from the first device. The first configuration information is used to configure first DRX configuration information, second DRX configuration information, a first index, and a second index, the first index corresponds to the first DRX configuration information, and the second index corresponds to the second DRX configuration information.

Step 1301 is similar to step 801. For details, refer to the description of step 801. Details are not described herein again.

Step 1302: The first device sends second configuration information to the second device, and correspondingly, the second device receives the second configuration information from the first device. The second configuration information carries first indication information, the first indication information indicates the second device to start N first timers corresponding to the first index, and N is a positive integer greater than or equal to 1.

Step 1302 is similar to step 902. For details, refer to the description of step 902. Details are not described herein again.

It should be additionally noted that, in an embodiment corresponding to FIG. 13, the second configuration information may be configuration information used to configure transmission of an uplink CG type 1. Optionally, the second configuration information may indicate a second transport block for uplink transmission.

Step 1303: The second device sends the second transport block to the first device, and correspondingly, the first device receives the second transport block from the second device.

Step 1304: The first device and the second device each start a first DRX-HARQ-RTT-TimerUL in a fourth time unit, where the fourth time unit is an initial time unit after a time unit corresponding to a physical uplink shared channel (Physical uplink shared channel, PUSCH) for sending the second transport block.

Step 1305: If the first DRX-HARQ-RTT-TimerUL expires, the second device starts a first DRX-RetransmissionTimerUL in a fifth time unit, where the fifth time unit is an initial time unit after the first DRX-HARQ-RTT-TimerUL expires.

Step 1306: If the first DRX-HARQ-RTT-TimerUL expires and the second transport block fails to be decoded, the first device starts the first DRX-RetransmissionTimerUL in a fifth time unit, where the fifth time unit is the initial time unit after the first DRX-HARQ-RTT-TimerUL expires.

Step 1303 is similar to step 1005, and reference may be made to the description of step 1005. Step 1304 is similar to step 1006, and reference may be made to the description of step 1006. Step 1305 is similar to step 1007, and reference may be made to the description of step 1007. Step 1306 is similar to step 1008, and reference may be made to the description of step 1008. This is uniformly described herein, and details are not described again.

Optionally, configuration information of semi-persistent scheduling used for downlink transmission may be indicated by using an SPS-Config information element, and content of the SPS-Config information element may be shown as follows:

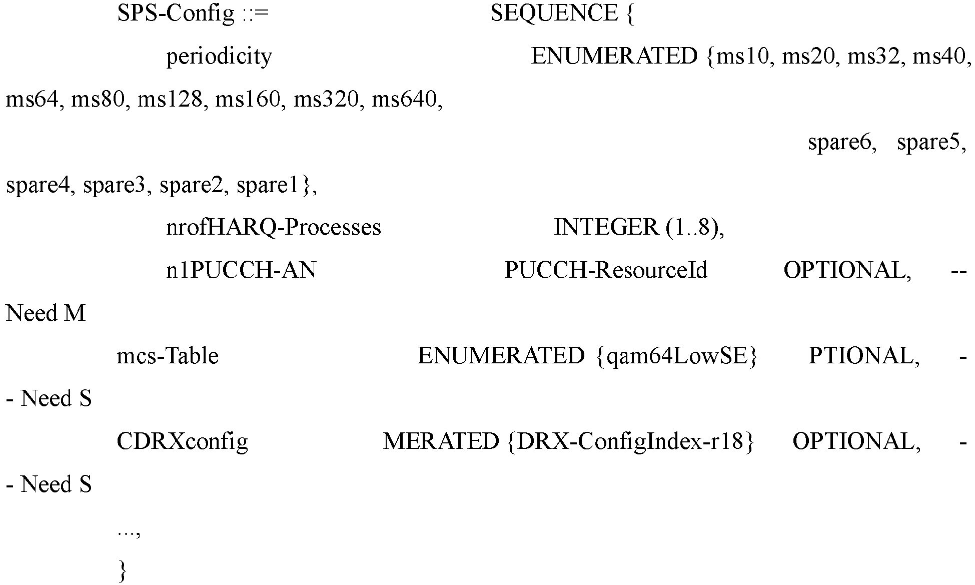

For another example, configuration information of semi-persistent scheduling used for uplink transmission may be indicated by using a ConfiguredGrantConfig information element, and content of the ConfiguredGrantConfig information element may be shown as follows:

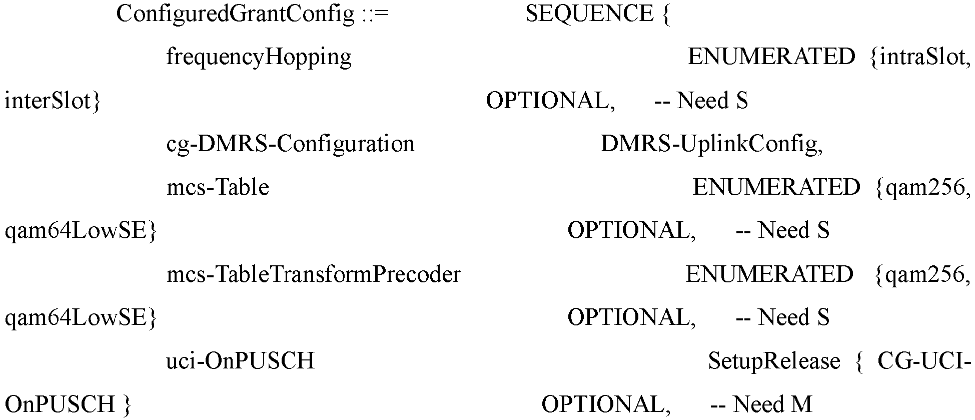

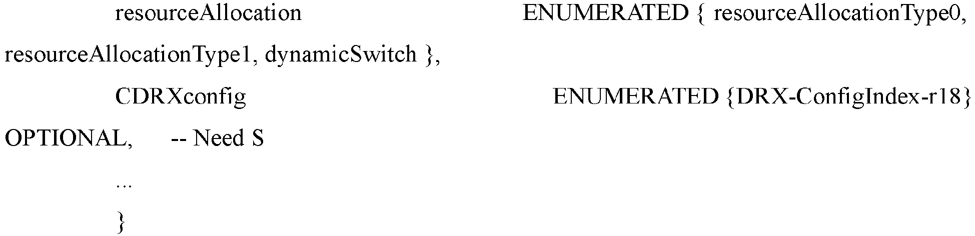

In the SPS-Config information element or the ConfiguredGrantConfig information element, the CDRXconfig may indicate a first index corresponding to semi-persistent scheduling configuration information.

Optionally, the first indication information is carried in the second configuration information, the second configuration information further indicates and/or activates a semi-persistent scheduling configuration, and the semi-persistent scheduling configuration includes a first transmission cycle; and in an activation period of the semi-persistent scheduling configuration, the first device sends a first transport block to the second device based on the first transmission cycle.

Optionally, the first indication information is carried in the second configuration information, the second configuration information further indicates and/or activates the semi-persistent scheduling configuration, and the semi-persistent scheduling configuration includes a second transmission cycle; and in the activation period of the semi-persistent scheduling configuration, the first device sends a second transport block to the second device based on the second transmission cycle.

Optionally, the first indication information may be carried in first control information, and the first control information may indicate the first transport block. The first control information is further used to activate the semi-persistent scheduling configuration, and the semi-persistent scheduling configuration includes the first transmission cycle; and in the activation period of the semi-persistent scheduling configuration, the first device sends the first transport block to the second device based on the first transmission cycle.

Optionally, the first indication information may be carried in second control information, and the second control information may indicate the second transport block. The second control information is further used to activate the semi-persistent scheduling configuration, and the semi-persistent scheduling configuration includes the second transmission cycle; and in the activation period of the semi-persistent scheduling configuration, the first device receives the second transport block from the second device based on the second transmission cycle.

Optionally, in this embodiment of this application, a plurality of pieces of DRX configuration information configured by using the first configuration information may correspond to a same set of timer parameters. For example, a DRX-onDurationTimer, a DRX-inactivityTimer, a DRX-HARQ-RTT-TimerDL, a DRX-HARQ-RTT-TimerUL, a DRX-RetransmissionTimerDL, and a DRX-RetransmissionTimerUL corresponding to the plurality of pieces of DRX configuration information may be the same. In addition, these timer parameters do not need to be associated with DRX configuration information. Therefore, when the second device needs to determine a timer to be started, the second device may directly determine the timer to be started based on a local unique set of timer parameters of the second device, so that a problem that it is difficult to select from a plurality of timers of a same type corresponding to a plurality of sets of DRX configuration information does not exist.

Alternatively, the first DRX configuration information is used to configure complete DRX timer parameters, as shown in the foregoing DRX-Config. The second DRX configuration information or the third DRX configuration information is used to configure only some parameters, for example, configuration information such as the drx-onDurationTimer and a drx-LongCycleStartOffset, where the drx-LongCycleStartOffset represents a DRX cycle and a start offset. Other timer parameters such as the DRX-inactivityTimer, the DRX-HARQ-RTT-TimerDL, the DRX-HARQ-RTT-TimerUL, the DRX-RetransmissionTimerDL, and the DRX-Retransmission TimerUL may not be configured. Therefore, the second device has only one set of complete timer parameters: the DRX-inactivityTimer, the DRX-HARQ-RTT-TimerDL, the DRX-HARQ-RTT-TimerUL, the DRX-RetransmissionTimerDL, and the DRX-RetransmissionTimerUL, and therefore, a problem of misusing a timer does not occur.

For example, for details about complete parameters such as the DRX-onDurationTimer, the DRX-inactivityTimer, the DRX-HARQ-RTT-TimerDL, the DRX-HARQ-RTT-TimerUL and the DRX-RetransmissionTimerDL configured for a first set of DRX configuration information, refer to the foregoing DRX-Config configuration. For another DRX configuration (for example, a drx-SecondaryConfig information element), refer to the following manner:

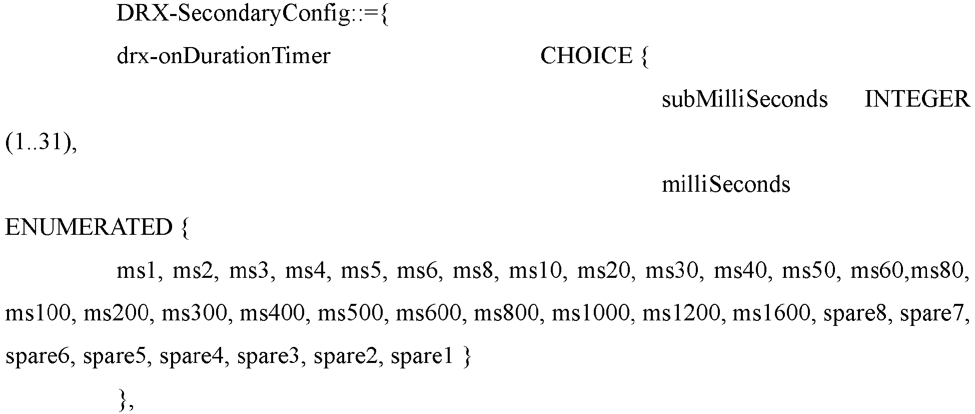

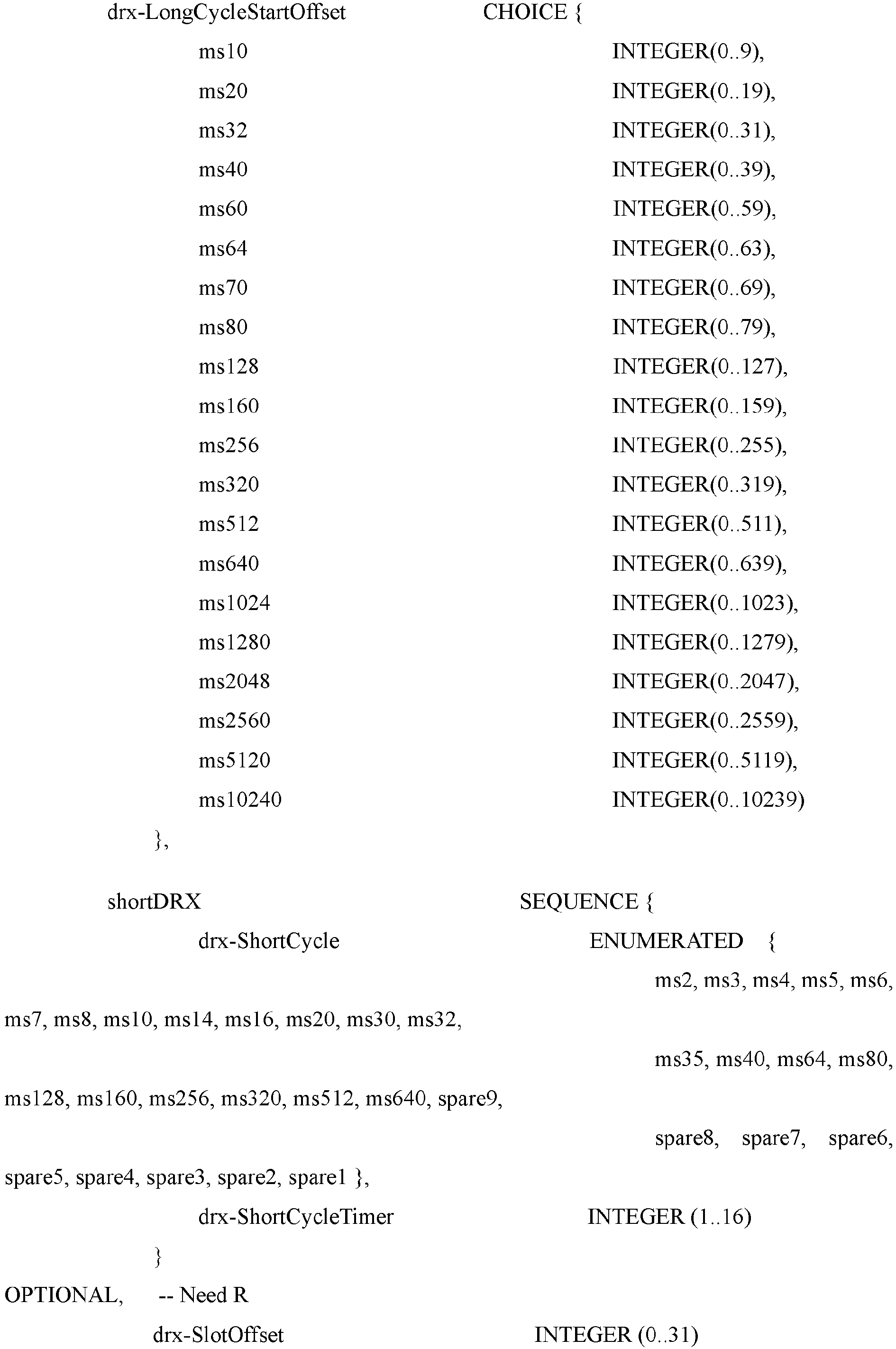

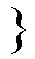

In other words, the drx-SecondaryConfig information element contains only some of original DRX configuration information like configuration information such as the drx-onDurationTimer and the drx-LongCycleStartOffset. Other timer parameters, such as the DRX-inactivityTimer, the DRX-HARQ-RTT-TimerDL, the DRX-HARQ-RTT-TimerUL, the DRX-RetransmissionTimerDL, and the DRX-RetransmissionTimerUL, may not be configured.

It should be noted that, in the foregoing method embodiments, the processor 701 in the communication apparatus 70 shown in FIG. 7 invokes the application program code stored in the memory 704, to indicate the first device to perform actions of the first device, and the processor 701 in the communication apparatus 70 shown in FIG. 7 invokes the application program code stored in the memory 704, to indicate the second device to perform actions of the second device.

It should be noted that the method procedure shown in FIG. 13 may also be used to configure configuration information of transmission of an uplink CG type 2 or configuration information of transmission of a downlink SPS.

It may be understood that, in the foregoing embodiments, the method and/or the step implemented by the first device may be implemented by a component (for example, a chip or a circuit) that may be used for the first device, the method and/or the step implemented by the second device may be implemented by a component (for example, a chip or a circuit) that may be used for the second device, and the method and/or the step implemented by a third device may be implemented by a component (for example, a chip or a circuit) that may be used for the third device.

Optionally, an embodiment of this application further provides a communication apparatus. The communication apparatus is configured to implement the foregoing methods. The communication apparatus may be the first device in the foregoing method embodiments, or an apparatus including the first device, or a component that can be used in the first device. Alternatively, the communication apparatus may be the second device in the foregoing method embodiments, or an apparatus including the second device, or a component that can be used in the second device. It may be understood that, to implement the foregoing functions, the communication apparatus includes a corresponding hardware structure and/or software module for performing a function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 14 is a diagram of a structure of a communication apparatus 140. The communication apparatus 140 includes a transceiver module 1401. The transceiver module 1401 may also be referred to as a transceiver unit, configured to implement a transceiver function, for example, may be a transceiver circuit, a transceiver machine, a transceiver, or a communication interface. Optionally, the communication apparatus 140 may further include a processing module 1402.

An example in which the communication apparatus 140 is the first device in the foregoing method embodiments is used.

The transceiver module 1401 may be configured to send first configuration information to a second device, where the first configuration information is used to configure first DRX configuration information, second DRX configuration information, a first index, and a second index, the first index corresponds to the first DRX configuration information, and the second index corresponds to the second DRX configuration information. In addition, the transceiver module 1401 may be further configured to send first indication information to the second device, where the first indication information indicates to start N first timers corresponding to the first index, and N is a positive integer greater than or equal to 1.

Optionally, the transceiver module 1401 may be further configured to send a first transport block to the second device. In addition, the transceiver module 1401 may be further configured to receive a first HARQ feedback from the second device, where the first HARQ feedback is a HARQ feedback of the second device for the first transport block. The processing module 1402 may be configured to start a first DRX HARQ RTT downlink timer in a first time unit, where the first time unit is an initial time unit after the first device receives the first HARQ feedback. Time units are obtained through division based on time domain, and a division result of the time units is learned by the first device in advance.

Optionally, if the first DRX HARQ RTT downlink timer expires, and the first HARQ feedback is a negative acknowledgment NACK, the processing module 1402 may be further configured to start a first DRX downlink retransmission timer in a second time unit, where the second time unit is an initial time unit after the first DRX HARQ RTT downlink timer expires.

Optionally, the first indication information is carried in first control information, and the first control information indicates the first transport block. If the first transport block is a new transmission transport block, the processing module 1402 may be further configured to start a first DRX-inactivity-timer in a third time unit, where the third time unit is an initial time unit after a time unit corresponding to a physical downlink control channel PDCCH for transmitting the first control information.

Optionally, the first control information is further used to activate a semi-persistent scheduling configuration, and the semi-persistent scheduling configuration includes a first transmission cycle. In the activation period of the semi-persistent scheduling configuration, the transceiver module 1401 may be configured to send the first transport block to the second device based on the first transmission cycle.

Optionally, the first indication information is carried in second configuration information. The transceiver module 1401 may be further configured to send first control information to the second device, where the first control information indicates the first transport block. If the first transport block is a new transmission transport block, the processing module 1402 may be further configured to start a first DRX-inactivity-timer in a third time unit, where the third time unit is the initial time unit after a time unit corresponding to a physical downlink control channel PDCCH for transmitting the first control information.

Optionally, the second configuration information further indicates and/or activates a semi-persistent scheduling configuration, and the semi-persistent scheduling configuration includes a first transmission cycle. In the activation period of the semi-persistent scheduling configuration, the transceiver module 1401 is configured to send the first transport block to the second device based on the first transmission cycle.

Optionally, the transceiver module 1401 may be further configured to receive a second transport block from the second device. In addition, the transceiver module 1401 may be further configured to start a first DRX HARQ RTT uplink timer in a fourth time unit, where the fourth time unit is an initial time unit after a time unit corresponding to a physical uplink shared channel PUSCH that sends the second transport block. Time units are obtained through division based on time domain, and a division result of the time units is learned by the first device in advance.

If the first DRX HARQ RTT uplink timer expires and the second transport block fails to be decoded, the processing module 1402 may be further configured to start a first DRX uplink retransmission timer in a fifth time unit, where the fifth time unit is an initial time unit after the first DRX HARQ RTT uplink timer expires.

Optionally, the second control information is further used to activate a semi-persistent scheduling configuration, and the semi-persistent scheduling configuration includes a second transmission cycle. In an activation period of the semi-persistent scheduling configuration, the transceiver module 1401 is configured to receive the second transport block from the second device based on the second transmission cycle.

Optionally, the first indication information is carried in second configuration information. The transceiver module 1401 may be configured to send the second control information to the second device, and the second control information indicates the second transport block. If the second transport block is a new transmission transport block, the processing module 1402 is configured to start the first DRX-inactivity-timer in a sixth time unit, where the sixth time unit is an initial time unit after a time unit corresponding to a PDCCH for transmitting the second control information.

Optionally, the second configuration information further indicates and/or activates a semi-persistent scheduling configuration, and the semi-persistent scheduling configuration includes a second transmission cycle. In an activation period of the semi-persistent scheduling configuration, the transceiver module 1401 is configured to receive the second transport block from the second device based on the second transmission cycle.

An example in which the communication apparatus 140 is the second device in the foregoing method embodiments is used.

The transceiver module 1401 may be configured to receive first configuration information from a first device, where the first configuration information is used to configure first DRX configuration information, second DRX configuration information, a first index, and a second index, the first index corresponds to the first DRX configuration information, and the second index corresponds to the second DRX configuration information. The transceiver module 1401 may be further configured to send first indication information to the second device, where the first indication information indicates to start N first timers corresponding to the first index, and N is a positive integer greater than or equal to 1.

Optionally, the transceiver module 1401 is configured to receive a first transport block from the first device. In addition, the transceiver module 1401 may be further configured to send a first HARQ feedback to the first device, where the first HARQ feedback is a HARQ feedback of the second device for the first transport block. Then, the transceiver module 1401 may be further configured to start a first DRX HARQ RTT downlink timer in a first time unit, where the first time unit is an initial time unit after the second device sends the first HARQ feedback. Time units are obtained through division based on time domain, and a division result of the time units is learned by the first device in advance.

Optionally, if the first DRX HARQ RTT downlink timer expires, and the first transport block fails to be decoded, the processing module 1402 may be configured to start the first DRX downlink retransmission timer in a second time unit, where the second time unit is an initial time unit after the first DRX HARQ RTT downlink timer expires.

Optionally, the first indication information may be carried in first control information, and the first control information may indicate the first transport block. If the first transport block is a new transmission transport block, the second device starts a first DRX-inactivity-timer in a third time unit, where the third time unit is an initial time unit after a time unit corresponding to a physical downlink control channel PDCCH that carries the first control information.

Optionally, the first control information is further used to activate a semi-persistent scheduling configuration, and the semi-persistent scheduling configuration includes a first transmission cycle. In an activation period of the semi-persistent scheduling configuration, the transceiver module 1401 may be further configured to receive the first transport block from the first device based on the first transmission cycle.

Optionally, the first indication information is carried in second configuration information. The transceiver module 1401 may be further configured to receive first control information from the first device, where the first control information indicates the first transport block. If the first transport block is a new transmission transport block, the processing module 1402 may be configured to start a first DRX-inactivity-timer in a third time unit, where the third time unit is an initial time unit after a time unit corresponding to a PDCCH that carries the first control information.

Optionally, second configuration information further indicates and/or activates a semi-persistent scheduling configuration, and the semi-persistent scheduling configuration includes a first transmission cycle. In an activation period of the semi-persistent scheduling configuration, the transceiver module 1401 may be further configured to receive the first transport block from the first device based on the first transmission cycle.

Optionally, the transceiver module 1401 may be further configured to send a second transport block to the first device. Then, the processing module 1402 may be further configured to start a first DRX HARQ RTT uplink timer in a fourth time unit, where the fourth time unit is an initial time unit after a time unit corresponding to a physical uplink shared channel PUSCH that carries the second transport block. Time units are obtained through division based on time domain, and a division result of the time units is learned by the first device in advance.

Optionally, the processing module 1402 may be configured to start the first DRX uplink retransmission timer in a fifth time unit, where the fifth time unit is an initial time unit after the first DRX HARQ RTT uplink timer expires. In addition, the processing module 1402 may be further configured to monitor control information within start time of the first DRX uplink retransmission timer.

Optionally, the second control information may be further used to activate a semi-persistent scheduling configuration, and the semi-persistent scheduling configuration includes a second transmission cycle. In an activation period of the semi-persistent scheduling configuration, the transceiver module 1401 may be further configured to send the second transport block to the first device based on the second transmission cycle.

Optionally, the first indication information is carried in second configuration information. The transceiver module 1401 may be further configured to receive the second control information from the first device, and the second control information indicates the second transport block. If the second transport block is a new transmission transport block, the second device starts a first DRX-inactivity-timer in a sixth time unit, where the sixth time unit is an initial time unit after a time unit corresponding to a PDCCH that carries the second control information.

Optionally, the second configuration information further indicates and/or activates the semi-persistent scheduling configuration, and the semi-persistent scheduling configuration includes the second transmission cycle. In the activation period of the semi-persistent scheduling configuration, the transceiver module 1401 may be further configured to send the second transport block to the second device based on the second transmission cycle.

It should be noted that all related content of the steps in the foregoing method embodiments may be cited in function description of corresponding functional modules. Details are not described herein again. Because the communication apparatus 140 provided in this embodiment may perform the foregoing DRX management method, for a technical effect that can be obtained by the communication apparatus 140, refer to the foregoing method embodiments. Details are not described herein again.

In this embodiment, the communication apparatus 140 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 140 may be in a form of the communication apparatus 70 shown in FIG. 7.

For example, the processor 701 in the communication apparatus 70 shown in FIG. 7 may invoke computer-executable instructions stored in the memory 704, so that the communication apparatus 70 performs the DRX management method in the foregoing method embodiments.

Specifically, functions/implementation processes of the transceiver module 1401 and the processing module 1402 in FIG. 14 may be implemented by the processor 701 in the communication apparatus 70 shown in FIG. 7 by invoking the computer-executable instructions stored in the memory 704. Alternatively, functions/implementation processes of the transceiver module 1401 in FIG. 14 may be implemented by the communication interface 703 in the communication apparatus 70 shown in FIG. 7, and functions/implementation processes of the processing module 1402 in FIG. 14 may be implemented by the processor 701 in the communication apparatus 70 shown in FIG. 7 by invoking the computer-executable instructions stored in the memory 704.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, devices, and methods may be implemented in other manners. For example, the described device embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

Terms such as "component", "module", and "system" used in this application are used to indicate computer-related entities. The computer-related entity may be hardware, firmware, a combination of hardware and software, software, or software in running. For example, a component may be, but is not limited to, a process that runs on a processor, a processor, an object, an executable file, a thread of execution, a program, and/or a computer. In an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the word "example" is used to represent giving an example, an illustration, or a description. Any embodiment or design scheme described as an "example" in this application should not be explained as being more preferred or having more advantages than another embodiment or design scheme. Exactly, the term example is used to present a concept in a specific manner.

In embodiments of this application, information (information), signal (signal), message (message), and channel (channel) may be interchangeably used sometimes. It should be noted that expressed meanings are consistent when differences are not emphasized. "Of (of)", " relevant (corresponding, relevant)", and "corresponding (corresponding)" may be interchangeably used sometimes. It should be noted that meanings expressed by the terms are consistent when differences of the terms are not emphasized. Sometimes, "system" and "network" may be used together. When the difference is not emphasized, the meanings to be expressed are consistent. For example, a "communication network" also refers to a "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A discontinuous reception DRX management method performed by a first communication apparatus, wherein the method comprises:
sending first configuration information to a second device, wherein the first configuration information is used to configure first DRX configuration information, second DRX configuration information, a first index, and a second index, the first index corresponds to the first DRX configuration information, and the second index corresponds to the second DRX configuration information; and
sending first indication information to the second device, wherein the first indication information indicates to start N first timers corresponding to the first index, and N is a positive integer greater than or equal to 1.

2. The method according to claim 1, wherein the N first timers are indicated by the first DRX configuration information, and the N first timers comprise at least one of the following: a first DRX-inactivity-timer, a first DRX hybrid automatic repeat request HARQ round trip time RTT downlink timer, a first DRX downlink retransmission timer, a first DRX HARQ RTT uplink timer, or a first DRX uplink retransmission timer.

3. The method according to claim 2, wherein the method further comprises:
sending a first transport block to the second device;
receiving a first HARQ feedback from the second device, wherein the first HARQ feedback is a HARQ feedback of the second device for the first transport block; and
starting the first DRX HARQ RTT downlink timer in a first time unit, wherein the first time unit is an initial time unit after the first device receives the first HARQ feedback, wherein
time units are obtained through division based on time domain, and a division result of the time units is learned by the first device in advance.

4. The method according to claim 3, wherein the method further comprises:
if the first DRX HARQ RTT downlink timer expires, and the first HARQ feedback is a negative acknowledgment NACK, starting the first DRX downlink retransmission timer in a second time unit, wherein the second time unit is an initial time unit after the first DRX HARQ RTT downlink timer expires.

5. The method according to claim 3 or 4, wherein the first indication information is carried in first control information, the first control information indicates the first transport block, and the method further comprises:
if the first transport block is a new transmission transport block, starting the first DRX-inactivity-timer in a third time unit, wherein the third time unit is an initial time unit after a time unit corresponding to a physical downlink control channel PDCCH that carries the first control information.

6. The method according to claim 3 or 4, wherein the first indication information is carried in second configuration information, and the method further comprises:
sending first control information to the second device, wherein the first control information indicates the first transport block; and
if the first transport block is a new transmission transport block, starting the first DRX-inactivity-timer in a third time unit, wherein the third time unit is an initial time unit after a time unit corresponding to a PDCCH that carries the first control information.

7. The method according to claim 2, wherein the method further comprises:
receiving a second transport block from the second device; and
starting the first DRX HARQ RTT uplink timer in a fourth time unit, wherein the fourth time unit is an initial time unit after a time unit corresponding to a physical uplink shared channel PUSCH that carries the second transport block; wherein
time units are obtained through division based on time domain, and a division result of the time units is learned by the first communication apparatus in advance.

8. The method according to claim 7, wherein the method further comprises:
if the first DRX HARQ RTT uplink timer expires and the second transport block fails to be decoded, starting the first DRX uplink retransmission timer in a fifth time unit, wherein the fifth time unit is an initial time unit after the first DRX HARQ RTT uplink timer expires.

9. The method according to claim 7 or 8, wherein the first indication information is carried in second control information, and the second control information indicates the second transport block.

10. The method according to claim 7 or 8, wherein the first indication information is carried in second configuration information, and the method further comprises:
sending second control information to the second device, wherein the second control information indicates the second transport block; and
if the second transport block is a new transmission transport block, starting the first DRX-inactivity-timer in a sixth time unit, wherein the sixth time unit is an initial time unit after a time unit corresponding to a PDCCH that carries the second control information.

11. The method according to any one of claims 1 to 10, wherein the first configuration information is further used to configure third DRX configuration information and a third index, and the third index corresponds to the third DRX configuration information.

12. A discontinuous reception DRX management method performed by a second communication apparatus, wherein the method comprises:
receiving first configuration information from a first device, wherein the first configuration information is used to configure first DRX configuration information, second DRX configuration information, a first index, and a second index, the first index corresponds to the first DRX configuration information, and the second index corresponds to the second DRX configuration information; and
receiving first indication information from the first device, and starting, based on the first indication information, N first timers corresponding to the first index, wherein N is a positive integer greater than or equal to 1.

13. The method according to claim 12, wherein the N first timers are indicated by the first DRX configuration information, and the N first timers comprise at least one of the following: a first DRX-inactivity-timer, a first DRX hybrid automatic repeat request HARQ round trip time RTT downlink timer, a first DRX downlink retransmission timer, a first DRX HARQ RTT uplink timer, or a first DRX uplink retransmission timer.

14. The method according to claim 13, wherein the method further comprises:
receiving a first transport block from the first device;
sending a first HARQ feedback to the first device, wherein the first HARQ feedback is a HARQ feedback of the second device for the first transport block; and
starting the first DRX HARQ RTT downlink timer in a first time unit, wherein the first time unit is an initial time unit after the second device sends the first HARQ feedback, wherein
time units are obtained through division based on time domain, and a division result of the time units is learned by the first device in advance.

15. The method according to claim 14, wherein the method further comprises:
if the first DRX HARQ RTT downlink timer expires and the first transport block fails to be decoded, starting the first DRX downlink retransmission timer in a second time unit, wherein the second time unit is an initial time unit after the first DRX HARQ RTT downlink timer expires.

16. The method according to claim 13 or 14, wherein the first indication information is carried in first control information, the first control information indicates the first transport block, and the method further comprises:
if the first transport block is a new transmission transport block, starting the first DRX-inactivity-timer in a third time unit, wherein the third time unit is an initial time unit after a time unit corresponding to a physical downlink control channel PDCCH that carries the first control information.

17. The method according to claim 13 or 14, wherein the first indication information is carried in second configuration information, and the method further comprises:
receiving first control information from the first device, wherein the first control information indicates the first transport block; and
if the first transport block is a new transmission transport block, starting the first DRX-inactivity-timer in a third time unit, wherein the third time unit is an initial time unit after a time unit corresponding to a PDCCH that carries the first control information.

18. The method according to claim 13, wherein the method further comprises:
sending a second transport block to the first device; and
starting the first DRX HARQ RTT uplink timer in a fourth time unit, wherein the fourth time unit is an initial time unit after a time unit corresponding to a physical uplink shared channel PUSCH that carries the second transport block, wherein
time units are obtained through division based on time domain, and a division result of the time units is learned by the first device in advance.

19. The method according to claim 18, wherein the method further comprises:
if the first DRX HARQ RTT uplink timer expires, starting the first DRX uplink retransmission timer in a fifth time unit, wherein the fifth time unit is an initial time unit after the first DRX HARQ RTT uplink timer expires; and
monitoring control information within start time of the first DRX uplink retransmission timer.

20. The method according to any one of claims 12 to 19, wherein the first configuration information is further used to configure third DRX configuration information and a third index, and the third index corresponds to the third DRX configuration information.

21. A first communication apparatus, wherein the first communication apparatus comprises a processor and a memory, and the memory is configured to store computer-executable instructions; and when the computer-executable instructions are executed by the processor, the method according to any one of claims 1 to 11 is implemented.

22. A second communication apparatus, wherein the second communication apparatus comprises a processor and a memory, and the memory is configured to store computer-executable instructions; and when the computer-executable instructions are executed by the processor, the method according to any one of claims 12 to 20 is implemented.

23. A computer-readable storage medium, wherein the computer-readable storage medium stores a computer program; and when the computer program is executed, the method according to any one of claims 1 to 20 is implemented.

24. A computer program product, comprising a computer program, wherein when the computer program is executed, the method according to any one of claims 1 to 20 is implemented.
